# EUROPEAN PATENT SPECIFICATION

(11) **EP 1 097 602 B1**
(45) Date of publication and mention of the grant of the patent: **18.04.2007**
(21) Application number: 99935688.4
(22) Date of filing: 19.07.1999
(51) Int. Cl.: H04Q 7/38, H04B 7/26

(54) **SOFT HANDOVER IN A HYBRID GSM/CDMA NETWORK**
SANFTES WEITERREICHEN IN EINEM HYBRIDEN GSM/CDMA NETZWERK
TRANSFERT DEPUIS UNE STATION DE BASE DANS UN RESEAU HYBRIDE GSM/CDMA

(30) Priority: 20.07.1998 US 119717
(43) Date of publication of application: 09.05.2001
(73) Proprietor: QUALCOMM INCORPORATED, San Diego, CA 92121-1714 (US)
(72) Inventor: NEVO, Ron, 20187 Misgav (IL); VAKULENKO, Michael, 35849 Haifa (IL); BRYGER, Boaz, E., 31905 Haifa (IL); GARDNER, William, San Diego, CA 92130 (US); CASPI, Dror, 29000 Kiryat Yam (IL); MENDELSON, Assaf, 75438 Rishon Lezion (IL); KOLOR, Sergio, 34612 Haifa (IL); NIZRI, Shlomo, 14279 Tiberias (IL); KESSLER, Ilan, 34602 Haifa (IL); LEVY, Atai, 34602 Haifa (IL); SHIDELMAN, Dror, 32984 Haifa (IL); RIMONI, Yoram, 34970 Haifa (IL)
(74) Representative: Walsh, Michael Joseph
(86) International application number: PCT/US1999/016250
(87) International publication number: WO 2000/004729

(56) References cited:
- EP-A- 0 701 337
- EP-A- 0 719 064
- WO-A-97/31503
- US-A- 5 659 598

## Description

### FIELD OF THE INVENTION

The present invention relates generally to wireless telecommunications, and specifically to advanced cellular telephone networks.

### BACKGROUND OF THE INVENTION

The Global System for Mobile (GSM) telecommunications is used in cellular telephone networks in many countries around the world. GSM offers a useful range of network services and standards. Existing GSM networks are based on time-division multiple access (TDMA) digital communications technology. In a TDMA-based cellular network, each mobile subscriber unit communicates with only a single base station at any given time. When a subscriber moves from one cell to another, a "hard handover" takes place, in which the base station with which the subscriber has been communicating breaks off its link with the subscriber, and a new base station takes over.

Code-division multiple access (CDMA) is an improved digital communications technology, which affords more efficient use of radio bandwidth than TDMA, as well as a more reliable, fade-free link between cellular telephone subscribers and base stations. The leading CDMA standard is IS-95, promulgated by the Telecommunications Industry Association (TIA). This standard provides "soft handover" (or "handoff") capability, wherein in moving from one cell to another, the subscriber unit is temporarily in contact with two or more base stations at the same time. This soft handover, which is made possible by the code-division approach, decreases the likelihood of a loss of connection, which can happen frequently in hard handovers.

PCT Patent Publication WO 97/31503 relates to method and apparatus for switching the radio interface layer of a wireless telephone call from code division multiple access (CDMA) modulated to GSM time division multiple access (TDMA) modulation during the course of that telephone call or other communication. A set of base stations operating in accordance with the GSM standard generate a pilot beacons signals in accordance with CDMA technology. During a phone call, a subscriber unit detects CDMA pilot signals, and notifies a base station controller when CDMA pilot signals are detected and strength at which they are received. The base station controller identifies CDMA pilot signals from CDMA pilot beacon, and initiates a CDMA to GSM handover via the generation of a set of signalling messages which instruct the subscriber unit and receiving GSM infrastructure equipment to prepare for the switching of the radio interface layer. The subscriber unit responds by acquiring the GSM synchronization information, and establishing a RF interface with the GSM base station without interrupting the telephone call being conducted.

PCT patent application PCT/US96/20764 describes a wireless telecommunications system that uses a CDMA air interface (i.e., basic RF communications protocols) to implement GSM network services and protocols. Using this system, at least some of the TDMA base stations (BSSs) and subscriber units of an existing GSM network would be replaced or supplemented by corresponding CDMA equipment. CDMA BSSs in this system are adapted to communicate with GSM mobile switching centers (MSCs) via a standard GSM A-interface. The core of GSM network services is thus maintained, and the changeover from TDMA to CDMA is transparent to users.

Hybrid cellular communications networks, incorporating both GSM and CDMA elements, are also described in PCT patent publications WO 95/24771 and WO 96/21999, and in an article by Tscha, et al., entitled "A Subscriber Signaling Gateway between CDMA Mobile Station and GSM Mobile Switching Center," in Proceedings of the 2nd International Conference on Universal Personal Communications, Ottawa (1993), pp. 181-185. None of these publications deals with specific issues of how to perform efficient handovers of subscriber units between different base stations in such hybrid networks.

PCT patent application PCT/US97/00926, describes methods of intersystem handover between CDMA and TDMA BSSs in a hybrid GSM/CDMA telecommunications system. A GSM/TDMA BSS generates pilot beacon signals in accordance with CDMA technology. During a telephone call, a subscriber unit detects the pilot signals and notifies a base station controller that the signals have been detected. The subscriber unit is then handed over from the CDMA to the TDMA BSS without interrupting the call.

European Patent No. 0701337 of Mitsubishi Electric Corp. discloses a mobile communication system in which various access methods may be selected according to the user's priority. In the mobile communication system, each of a mobile station and radio base stations has a radio processor, which has TDMA, CDMA and FDMA communication units. The CDMA communication unit comprises channel coders each for performing a primary modulation to a transmitting signal, spread-spectrum code generators for respectively generating different spread-spectrum signals, a clock generator/controller for controlling the generation of chip clocks to control the generation of the spread-spectrum codes, oscillators for setting different carrier frequencies to outputs calculated as products, and a CPU for generally controlling various parts or elements to control the assignment of a CDMA signal or a TDMA signal to an arbitrary time slot transmitted from the TDMA communication unit. The radio processor transmits different signals of different access methods existing in each time slot of the same frame different signals.

U.S. Patent No. 5659598 of Jaervelae Teuvo et al discloses a dual mode terminal is provided, in which a mobile station of a mobile radio system and a cordless telephone are combined. This kind of terminal may have a connection with both a base station of the mobile radio system and a fixed part of the cordless telephone system. Handover may imply the transfer of a call from a fixed part of the cordless telephone system having a terminal-initiated handover to a base station of the mobile radio system having a network-initiated handover. In order to carry out a proper handover procedure, the cordless telephone part obtains from the mobile station part of the terminal measurement results relating to received signal strengths of the mobile system base stations in the neighborhood. The cordless telephone part of the terminal forwards these measurement results via a fixed part of the cordless telephone system to the mobile exchange of the mobile system in a handover request message. The mobile exchange selects a proper base station for handover and informs the mobile station part of the terminal about the identity of the selected base station via the cordless telephone part.

European Patent No. 0719064 of Nokia Mobile Phones Ltd discloses a radio telephone which automatically hands over a call from one radio telephone system to another radio telephone system. Communication with respective radio telephone systems may be simultaneously continued during handover until the handover is complete, or communication with one radio telephone system ceases before communication with the other radio telephone system commences. Delays between signals of different radio telephone systems which would cause audible interference are inhibited by FIR filtering and/or dynamic time-warping. If an handover fails then communication with the original radio telephone system is re-started or continued.

### SUMMARY OF THE INVENTION

It is an object of the present invention to provide methods and apparatus for use in a mixed TDMA/CDMA cellular communications network.

It is a further object of some aspects of the present invention to provide improved methods and apparatus enabling handover of a subscriber unit between TDMA and CDMA base stations without interrupting communications.

In preferred embodiments of the present invention, a mixed GSM/CDMA cellular communications system includes both TDMA and CDMA base stations, jointly controlled by a mobile switching center (MSC). Systems of this type are described generally in the above-mentioned PCT patent applications, which are incorporated herein by reference. A subscriber unit in the network, also referred to herein as a mobile station (MS), is capable of communicating with both types of base stations, by appropriately switching between TDMA and CDMA air interfaces, while preferably using GSM network protocols over both types of interface. It is a feature of preferred embodiments of the present invention that the communications system may be based on an existing GSM/TDMA infrastructure, with the addition of CDMA BSSs, and with substantially no other modification to the existing infrastructure.

In order to determine when a handover should take place, a MS in communication with a current base station of one type (CDMA or TDMA) monitors RF signals originating from another base station, which may be a base station of the other type (TDMA or CDMA, respectively). A message sequence between the current base station and the MS enables the MS to acquire appropriate synchronization information with regard to the new base station, and report back on this information to the current base station. The information is used by the system to enables the MS to establish an air interface with the new base station, whereupon the handover takes place without substantially interrupting communications between the MS and the network.

In the context of the present patent application, such handovers between base stations are referred to as "mobile-assisted handovers." Mobile-assisted handover is used in GSM and in CDMA systems known in the art, wherein a mobile station measures and reports on the strength of signals received from a base station transceiver in a neighboring cell before being handed over to that cell. In hybrid GSM/CDMA systems that have been proposed to date, however, mobile stations are presumed to be capable of receiving signals from either a CDMA or a TDMA base station at any given time (or a CDMA beacon associated with a TDMA base station, as in the above-mentioned PCT patent application PCT/US97/00926), but not both, and are therefore not capable of providing this type of assistance. The provision of mobile-assistance in accordance with the principles of the present invention enables handovers to be conducted more smoothly and reliably than would otherwise be possible.

In some preferred embodiments of the present invention, the MS switches between TDMA and CDMA operation in the course of a telephone call, according to instructions received from the base station with which the unit is in communication. Before the handover is to take place, the MS receives signals from both TDMA and CDMA base stations, and reports back to the base station regarding the signals it is receiving. The information thus reported is reported back to and used by the BSC to initiate the handover. Preferably, the MS comprises a single radio transceiver, and therefore, at any given moment the MS can communicate with either the TDMA or CDMA base station, but not both. (In accordance with the principles of IS-95, however, as described hereinabove, the unit can communicate with more than one CDMA base station at once.) It is noted further that each GSM/TDMA base station has its own synchronization clock, to which the MSs in communication therewith are synchronized, while the CDMA base stations are mutually synchronized to a real time of day. Therefore, in switching between the TDMA and CDMA stations, the MS in each case acquires and synchronizes its operation to the appropriate clock signal without substantially interrupting the telephone call.

In some of these preferred embodiments, the MS is in communication with a CDMA base station, when it is determined that the unit may be handed over to a GSM/TDMA base station. CDMA transmission by the MS transceiver is interrupted temporarily, during which time the unit performs a GSM neighbor scan, generally in accordance with GSM standards, to acquire and synchronize to the TDMA base station. Preferably, the CDMA transmission is interrupted for a single frame, typically 20 msec long, creating an idle time slot in accordance with the IS95 standard. After the TDMA base station is identified, and suitable messages have been exchanged, a traffic channel between the base station is opened, and the MS is switched to the TDMA base station while interruption of a telephone call being conducted by the MS is substantially minimized.

In others of these preferred embodiments, the MS is in communication with a TDMA base station, when it is determined that the unit may be handed over to a CDMA base station.

Although preferred embodiments are described herein with reference to MSs having a single transceiver for TDMA and CDMA use, it will be appreciated that the principles of the present invention may similarly be applied using subscriber units and system hardware of other types, and particularly using a subscriber unit having separate or only partially integrated TDMA and CDMA transceivers.

There is therefore provided a method handing over a mobile station as set out in appended Claim 1.

Preferably, receiving the data includes receiving a measurement of signal strength, and handing over the mobile station includes comparing measurements of signal strengths from the first and second base stations and handing over the mobile station responsive to the comparison. Preferably, receiving the data includes applying a weighting factor to the measurement of signal strength, wherein applying the weighting factor includes varying the factor according to a network condition in the system. Further preferably, applying the weighting factor includes transmitting a weighting factor over the communications link to the mobile station, which applies the weighting factor to the measurement.

Preferably, receiving the data includes receiving an identification of the second base station based on decoding by the mobile station of the signal received over the second air interface.

In a preferred embodiment, transmitting from the first base station to the mobile station a list of frequencies of base stations of the second type in the system, such that the mobile station seeks to receive the signal at a frequency in the list.

Preferably, handing over the mobile station includes transmitting a handover command from the first base station.

Preferably, establishing the communications link and receiving the data responsive to the signal include establishing the link and receiving the signal at the mobile station using a single RF transceiver in the mobile station.

In a preferred embodiment, one of the first and second air interfaces includes a TDMA interface, and the other of the interfaces includes a CDMA interface, wherein the TDMA interface preferably includes a GSM interface, and wherein the CDMA interface is configured to convey GSM network messages. Preferably, the CDMA interface is based on an IS-95 standard.

Preferably, establishing the communications link includes using a single radio resource management protocol layer to manage the first air interface, and wherein handing over the mobile station includes using the single radio resource management protocol layer to manage the second air interface.

Further preferably, receiving the data from the mobile station includes defining an area of overlap between a first region served by the first air interface and a second region served by the second air interface, and triggering the mobile station to receive the data when the mobile station is in the area of overlap.

In a preferred embodiment, the first air interface includes a CDMA interface, and wherein the second air interface includes a GSM/TDMA interface, and receiving data from the mobile station includes gating the mobile station to interrupt a CDMA communications link so as to receive and decode a GSM/TDMA signal. Preferably, gating the mobile station includes interrupting CDMA communications for the duration of an IS-95 frame, wherein receiving the data includes receiving an identification of the second base station based on decoding of GSM frequency correction and synchronization channels of the signal by the mobile station.

In another preferred embodiment, the first air interface includes a GSM/TDMA interface, and the second air interface includes a CDMA interface, and receiving the data from the mobile station includes controlling the mobile station to interrupt the communications link so as to receive and decode a CDMA signal.

Alternatively or additionally, receiving the data includes conveying a GSM cell broadcast service message to the mobile station to initiate a search by the mobile station for a signal from a base station of the second type. Preferably, conveying the GSM cell broadcast service message to the mobile station includes conveying the message so as to be received by the mobile station while the mobile station is operating in a dedicated mode.

Preferably, receiving the data from the mobile station includes receiving an identification of a CDMA pilot beam decoded by the mobile station. Further preferably, the method includes mapping the second base station as a GSM base station so as to control the handover.

In accordance with one embodiment of the present invention, the mobile wireless communication system is a GSM mobile wireless telecommunications system. The method further comprising:
mapping the CDMA base station that operates according to the CDMA air interface as a GSM/TDMA subsystem;
comparing the strengths of the first and second signals, substantially as though both the first and second base stations were GSM/TDMA base stations; and
handing over the mobile station from the first to the second base station responsive to comparison of the signal strengths.

Preferably, mapping the CDMA base station includes assigning to the base station a GSM frequency and location.

Further preferably, establishing the communications link and handing over the mobile station include conveying messages between the first and second subsystems and a mobile switching center in the system via a GSM A-interface. Preferably, both the first and second base station subsystems operate according to the CDMA air interface, wherein handing over the mobile station includes conveying a new IS-95 long code through the A-interface, substantially without violating A-interface protocols.

Preferably, receiving the data from the mobile station includes applying a weighting factor to the second signal, and wherein comparing the strengths of the signals includes comparing the weighted signal, wherein applying the weighting factor includes conveying the weighting factor to the mobile station, which applies the weighting factor to the second signal. Preferably, applying the weighting factor includes varying the factor according to a network condition in the system.

There is also provided in accordance with the present invention and as set out in the appended claims, a wireless communications apparatus, for use in a mobile telecommunications system, including:
a base station of a first type which transmits and receives a first signal according to a first air interface;
a base station of a second type which transmits and receives a second signal according to a second air interface; and
a mobile station, which receives the second signal over the second air interface from the base station of the second type while maintaining a communication link over the first air interface with the base station of the first type, and which transmits data to the base station of the first type responsive to the second signal so that the mobile station is handed over from the first to the second base station responsive to the transmitted data.

Preferably, the data transmitted by the mobile station includes a measurement of signal strength, such that the mobile station is handed over responsive to a comparison of signal strengths of the first and second signals. Preferably, a weighting factor is applied to the measurement of signal strength, wherein the weighting factor is varied according to a network condition in the system. Preferably, the weighting factor is transmitted over the communications link to the mobile station, which applies the weighting factor to the measurement.

Further preferably, the mobile station decodes the second signal to determine an identification of the base station of the second type.

Preferably, the base station of the first type transmits to the mobile station a list of frequencies of mobile stations of the second type in the system, such that the mobile station seeks to receive the second signal at a frequency in the list.

Preferably, the base station of the first type transmits a handover command to the mobile station, whereby the mobile station is handed over from the first to the second base station.

Further preferably, the mobile station includes a single RF transceiver which communicates with both the base stations of the first and second types.

In a preferred embodiment, one of the first and second air interfaces includes a TDMA interface, and the other of the interfaces includes a CDMA interface., wherein the TDMA interface preferably includes a GSM interface, and wherein the CDMA interface is configured to convey GSM network messages. Preferably, the CDMA interface is based on an IS-95 standard. Further preferably, the mobile station uses a single radio resource management protocol layer to manage both the first and second air interfaces.

Preferably, the base station triggers the mobile station to receive the second signal over the second air interface when the mobile station is in an area of overlap between a first region served by the first air interface and a second region served by the second air interface

In a preferred embodiment, the first air interface includes a CDMA interface, and the second air interface includes a GSM/TDMA interface, and the base station of the first type gates the mobile station to interrupt the communications link so as to receive and decode a GSM signal.

Preferably, the mobile station interrupts the link for the duration of an IS-95 frame.

Further preferably, the mobile station processes the second signal to decode GSM frequency correction and synchronization channels of the signal.

In another preferred embodiment, the first air interface includes a GSM/TDMA interface, and the second air interface includes a CDMA interface, and the base station of the first type controls the mobile station to interrupt the communications link so as to receive and decode a CDMA signal.

Preferably, the GSM cell broadcast center conveys a cell broadcast service message to the mobile station to initiate a search by the mobile station for the second signal, wherein the mobile station receives the cell broadcast service message while the mobile station is operating in a dedicated mode.

Alternatively or additionally, the mobile station processes the CDMA signal to identify a CDMA pilot beam.

Preferably, the mobile station receives the CDMA signal during a first TDMA time slot and processes the signal during a subsequent TDMA time slot while communicating with the base station over the TDMA interface so as to generate the data for transmission to the base station.

In accordance with a preferred embodiment of the present invention, the mobile wireless telecommunications is a GSM telecommunications system, including:
means for mapping said CDMA base station in the GSM system as a GSM base station,
wherein the mobile station is handed over from the first to the second subsystem responsive to a comparison of the strengths of the first and second signals received by the mobile station, substantially as though both the first and second base stations operated according to a GSM/TDMA air interface.

Preferably, the base station transmitting the CDMA signal is assigned a GSM frequency and location in the system. Further preferably, messages are conveyed between the first and second base stations and a mobile switching center in the system via a GSM A-interface, wherein both the first and second signals include CDMA signals. Preferably, a new IS-95 long code is conveyed through the A-interface from the second to the first base station in order to hand over the mobile station, substantially without violating A-interface protocols.

Preferably, the mobile station applies a weighting factor to the second signal before the signal strengths are compared.

The present invention will be more fully understood from the following detailed description of the preferred embodiments thereof, taken together with the drawings in which:

### BRIEF DESCRIPTION OF THE DRAWINGS

Fig. 1 is a schematic block diagram of a hybrid GSM/CDMA cellular communications system, in accordance with a preferred embodiment of the present invention;
Fig. 2A is a schematic block diagram illustrating communications protocols between a mobile station and base station subsystems in the system of Fig. 1, in accordance with a preferred embodiment of the present invention;
Fig. 2B is a schematic block diagram of a hybrid GSM/CDMA mobile station, in accordance with a preferred embodiment of the present invention;
Figs. 3A and 3B are schematic block diagrams illustrating communications protocol stacks between elements of the system of Fig. 1, in accordance with a preferred embodiment of the present invention;
Fig. 4A is a schematic block diagram illustrating handover of a mobile station from a CDMA base station to a GSM base station in the system of Fig. 1, in accordance with a preferred embodiment of the present invention;
Fig. 4B is a schematic block diagram illustrating signal flow associated with the handover of Fig. 4A, in accordance with a preferred embodiment of the present invention;
Fig. 5 is a schematic block diagram illustrating signal flow associated with provision of time of day information in the system of Fig. 1.
Fig. 6 is a schematic illustration showing cells in a hybrid GSM/CDMA cellular communications system, useful in understanding a method for handover of a mobile station from a GSM base station to a CDMA base station, in accordance with a preferred embodiment of the present invention;
Fig. 7 is a schematic block diagram illustrating signal flow associated with a handover from a GSM base station to a CDMA base station, in accordance with a preferred embodiment of the present invention;
Fig. 8 is a schematic block diagram illustrating handover of a mobile station between CDMA base stations in a hybrid GSM/CDMA cellular communications system, in accordance with a preferred embodiment of the present invention; and
Fig. 9 is a schematic illustration showing signal flow associated with the handover of Fig. 8, in accordance with a preferred embodiment of the present invention.

### DETAILED DESCRIPTION OF PREFERRED EMBODIMENTS

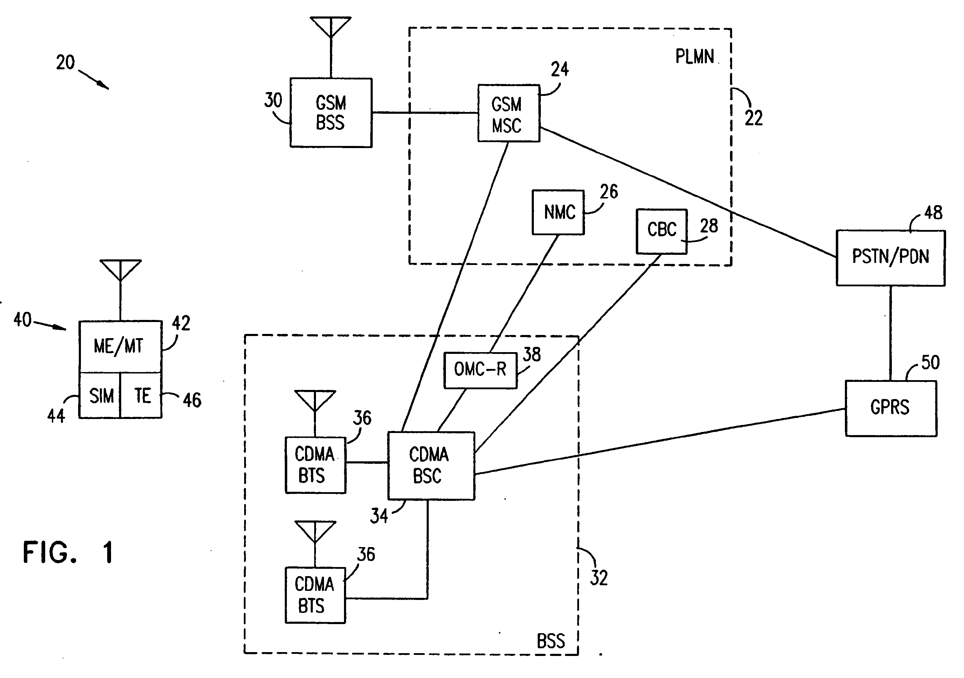

Reference is now made to Fig. 1, which is a schematic block diagram of a hybrid GSM/CDMA cellular communications system 20, in accordance with a preferred embodiment of the present invention. System 20 is built around a public land mobile network (PLMN) 22, which is based on the GSM communications standard, as described hereinabove. Infrastructure for such networks already exists and is in wide use in many countries, and the present invention has the advantage of enabling gradual introduction of CDMA service in conjunction with such a network without requiring major changes to the existing infrastructure. PLMN 22 comprises at least one mobile-services switching center (MSC) 24, or possibly a number of such centers (although only one MSC is shown here for clarity of illustration), which controls network operations within a geographical area. Among other functions, MSC 24 is responsible for location registration of subscriber units and handover of subscriber units between base stations, as well as linking PLMN 22 to a public switched telephone network (PSTN) and/or packet data network (PDN) 48. The PLMN also comprises a network management center (NMC) 26 and a cell broadcast center (CBC) 28. These functions are described further hereinbelow.

System 20 includes a plurality of mobile stations (MS) 40, which communicate with PLMN 22 via a plurality of base station subsystems (BSS) 30 and 32 over a wireless RF link in one or more of the accepted cellular communications frequencies. MS 40, which is also known as a subscriber unit, is capable of communicating with both GSM BSS 30, using a substantially standard GSM TDMA signaling protocol, and CDMA BSS 32, using CDMA-based communication methods described hereinbelow. Additionally, although in standard GSM systems, mobile stations can typically receive broadcasts from CBC 28 only in idle mode, MS 40 is capable of receiving such broadcasts during a call through BSS 30, as will be described further hereinbelow. Although for the sake of clarity, only one each of MS 40, GSM BSS 30 and CDMA BSS 32 is shown in Fig. 1, it will be understood that in actuality, system 20 typically comprises a plurality of each of these system elements.

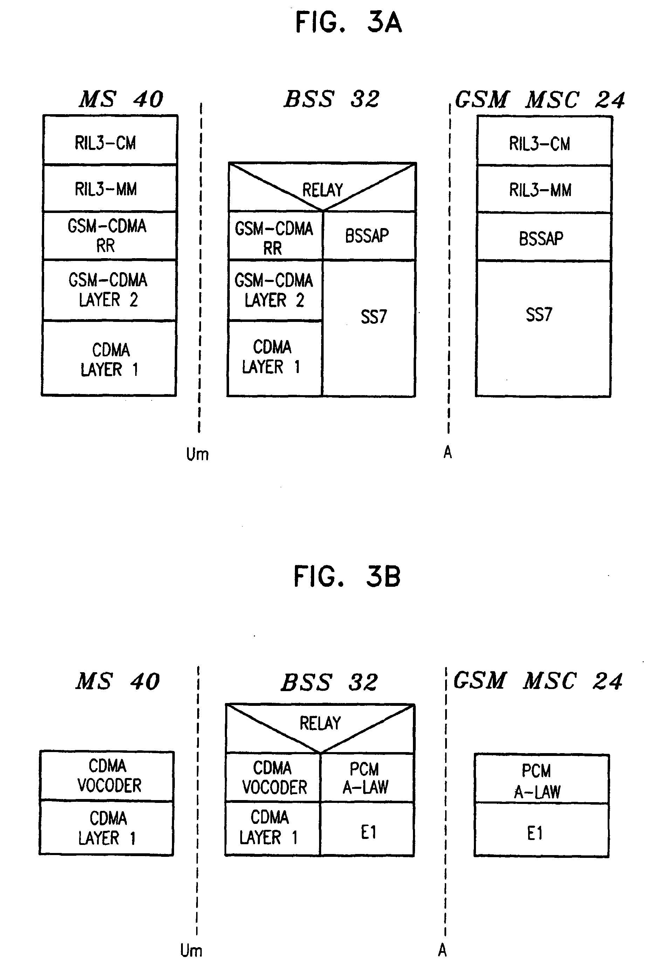

Both GSM BSS 30 and CDMA BSS 32 communicate with and are controlled by MSC 24. Communications between GSM BSS 30 and MSC 24 are substantially in accordance with GSM standards. CDMA BSS 32 is modified relative to the IS95 CDMA standard so as to communicate with PLMN 22 in accordance with GSM standards, and particularly so as to communicate with MSC 24 via the GSM standard A-interface, as further described hereinbelow with reference to Figs. 3A and 3B. BSS 32 also communicates with CBC 28, so as to receive messages to be broadcast over the air, and comprises a radio operation and maintenance center (OMC-R) 38. The OMC-R communicates with NMC 26 over a GSM-standard Q3 interface, preferably using an information model based on the GSM 12.XX series of specifications, which are incorporated herein by reference. Optionally, BSS 32 may be linked to a general packet data service (GPRS) 50, such as has been proposed by the European Telecommunications Standards Institute (ETSI). Alternatively or additionally, BSS 32 may be coupled for transmission of packet data directly to PSTN/PDN 48 (although such a connection is, for the sake of simplicity, not shown in Fig. 1), preferably with a link to the Internet therethrough.

Communications between CDMA BSS 32 and MS 40 are built on a CDMA "air interface," which is preferably generally in accordance with the IS95 standard for CDMA communications. BSS 32 is built around a base station controller (BSC) 34, which controls and communicates with a number of base station transceivers (BTS) 36. Each BTS transmits RF signals to and receives RF signals from MS 40 when the MS is within a geographical area, or cell, served by the particular BTS. When during a telephone call, the MS moves from the cell of one CDMA BTS 36 to another, a "soft handover" (or handoff) between the BTSs takes place, as is known in the CDMA art.

There may also be regions of service of system 20, however, which do not have CDMA coverage (i.e., there is no CDMA BTS 36 in such a region), or in which coverage is weak or congested. If MS 40 moves into such a region during a telephone call, the MS is handed over from the CDMA BTS to a BTS associated with GSM BSS 30 without interrupting the call. Similarly, if MS 40 moves from a region served only by GSM BSS 30 into the cell of CDMA BTS 36 during a call, the MS is preferably handed over from the GSM to the CDMA BSS. Methods for performing such handovers between CDMA and GSM/TDMA service and vice versa, as well as between one CMDA BSS 32 and another, are described further hereinbelow. By virtue of such methods and of the architecture of system 20, as shown in Fig. 1, MS 40 receives the benefits of CDMA service in those regions served by system 20 in which the service has been implemented; without losing service in TDMA regions. Transitions between CDMA and TDMA regions are substantially transparent to users of MS 40, because higher-level GSM network protocols are observed throughout the system, and only the lower-level RF air interface is changed during the transition.

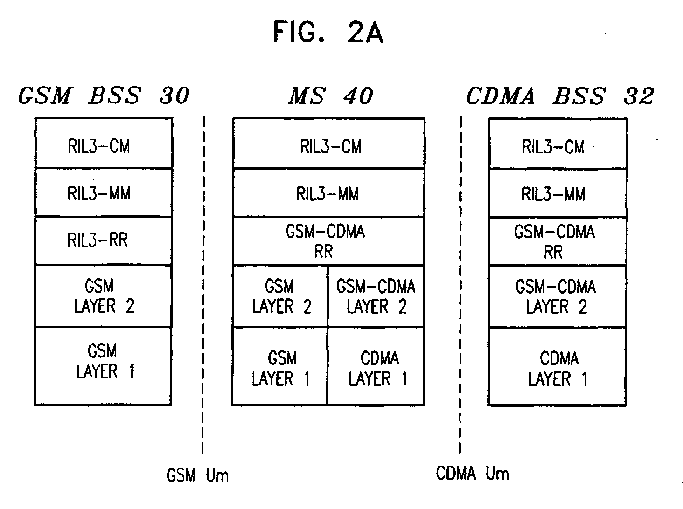

Fig. 2A is a block diagram that schematically illustrates communications protocol stacks between MS 40 and BSSs 30 and 32, in accordance with a preferred embodiment of the present invention. MS 40 communicates with GSM BSS 30 over a GSM Um interface, which is based on a standard TDMA air interface, so that substantially no modification is required to BSS 30 or to GSM Layer 1 and Layer 2 standard interface protocols in order to accommodate MS 40. MS 40 communicates with CDMA BSS 32 over a CDMA Um interface, based on a CDMA IS-95 air interface with certain modifications. Subscriber units known in the art are capable of operating over either a GSM Um or a CDMA Um interface, but not both.

In order to sustain both of these interfaces, MS 40 comprises mobile equipment (ME) 42 (Fig. 1), which must include either two radio transceivers, one configured for TDMA operation and one for CDMA, or a single transceiver which can dynamically switch between TDMA and CDMA. The ME includes mobile termination (MT), which supports terminal equipment (TE) 46 for voice and/or data input and output. In addition, MS 40 comprises a subscriber identity module (SIM) 44, in accordance with GSM standards.

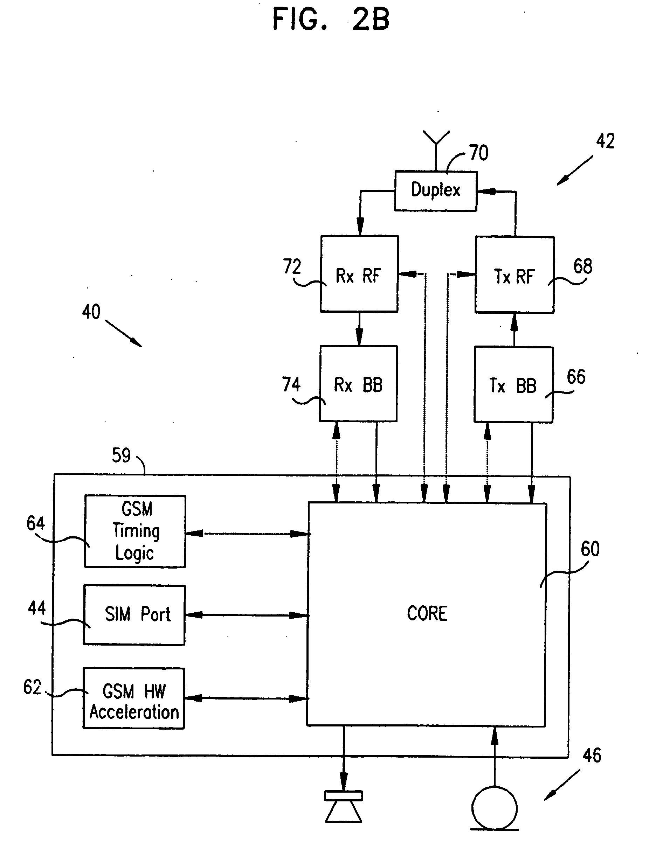

Fig. 2B is a schematic block diagram illustrating MS 40 comprising a single radio transceiver in ME 42, in accordance with a preferred embodiment of the present invention. MS 40 is built around a modem unit 59, including a DSP core 60 capable of generating and processing both TDMA and CDMA signals. Preferably, core 60 comprises an ASIC device, including stand-alone CDMA transmission/reception processing, which is supported by GSM timing logic 64 and a GSM hardware accelerator (or DSP) 62, as well as having a port for SIM 44. Core 60 receives input and delivers output to TE 46. In this case, TE 46 is represented as an audio microphone and speaker, and core 60 performs D/A and A/D conversion, as well as vocoding functions on the audio signals, as are known in the art. Either GSM or CDMA vocoding is applied, depending on whether MS 40 is in contact with GSM BSS 30 or CDMA BSS 32. Core 60 may, additionally or alternatively, be configured to work with TE 46 providing digital data input/output, such as a fax device.

Core 60 outputs digital data, which may be in either TDMA or CDMA format, to a mixed-signal output device 66. Device 66 processes and converts the data to analog baseband form, for input to RF transmitter 68. A duplexer 70 conveys the resultant RF signals via antenna to the GSM or CDMA base station, as appropriate. Signals received from the base station are passed by duplexer 70 through an RF receiver 72 and a mixed-signal input device 74, which performs baseband conversion and AGC functions, to core 60. Preferably, transmitter 68, receiver 72 and mixed-signal devices 66 and 74 are controlled by core 60.

RF transmission and reception by MS 40 are preferably at frequencies in the GSM 900 or 1800 MHz band, for compatibility with existing GSM equipment, particularly BSS 30. Assuming that MS 40 includes only the single transceiver shown in Fig. 2B, operating in the GSM band, CDMA equipment in system 20 must be appropriately configured to operate in this frequency range, as well.

Returning to Fig. 2A, whether MS 40 physically includes one transceiver or two, it must support dual air interface Layers 1 and 2 in its protocol stack, for operation vis-a-vis GSM BSS 30 and CDMA BSS 32, respectively. The CDMA air interface between MS 40 and CDMA BSS 32 comprises CDMA Layer 1, which operates on a standard IS-95 protocol, and GSM-CDMA Layer 2, in which IS-95 operation is modified to accommodate the needs of GSM network services. Layer 2 supports transmission of frames between MS 40 and BSS 30 or 32. GSM-CDMA Layer 2 includes functionality, such as message ordering, priority and fragmentation, and suspension and resumption of communications, which is normally supported by the standard GSM Layer 2, but not by CDMA IS-95. Vis-a-vis GSM BSS 30, air interface Layers 1 and 2 are in accordance with GSM standards, substantially without modification.

Standard GSM protocols include a third Radio Interface Layer (RIL3), including three sub-layers, above GSM Layer 1 and Layer 2. The lowest of these three RIL3 sub-layers is a Radio Resource (RR) management layer, which supports Mobile Management (MM) and Connection Management (CM) sub-layers above it. The RIL3 sub-layers in GSM BSS 30 are substantially unchanged with respect to the GSM standard, and the GSM MM and CM sub-layers are likewise maintained substantially without change in MS 40. The CM sub-layer supports signaling for call processing, as well as GSM supplementary services and short message service (SMS). The MM sub-layer supports signaling required for locating MS 40, authentication and encryption key management.

In order to support the MM and CM layers, a GSM-CDMA RR layer is introduced in the MS 40 and BSS 32 protocol stacks. The GSM-CDMA RR layer, which manages radio resources and maintains radio links between MS 40 and BSSs 30 and 32, is "aware" of the existence of the dual GSM and CDMA lower layers (Layers 1 and 2) in the MS 40 protocol stack. It invokes the appropriate lower layers in the MS stack to communicate with either the standard RIL3-RR layer over the GSM Um interface or the GSM-CDMA RR layer of BSS 32 over the CDMA Um interface, depending on instructions it receives from the BSS with which it is in communication. The MM and CM layers are not processed by BSS 32, but are rather relayed through between MS 40 and MSC 24 for processing in a manner substantially transparent to the CDMA air interface layers below. The RR layer in the MS stack also controls the handover between the corresponding air interfaces defined in Layers 1 and 2 and assists in cell selection for the handover, under instructions from MSC 24 and the BSSs.

Regardless of which of the air interfaces is in use, the GSM-CDMA RR layer supports the standard GSM RIL3-MM and CM layers above it. The RR layer preferably offers complete radio resource management functionality as defined by GSM specifications 04.07 and 04.08, which are incorporated herein by reference. Although a "RR" layer *per se* is not defined by the CDMA IS-95 standard, the GSM-CDMA RR layer described herein maintains full IS-95 radio resource functionality, as well.

In accordance with GSM standards, the functionality of the RR layer includes both idle mode operation and dedicated mode services (i.e., services performed during a telephone conversation). The idle mode operation of the RR layer includes automatic cell selection and idle handover between GSM and CDMA cells, as well as between pairs of CDMA cells and pairs of GSM cells, with cell change indication as specified by the GSM standard. The RR layer in idle mode also performs broadcast channel processing, as specified by GSM and CDMA standards, and establishment of RR connections.

In dedicated mode, the RR layer performs the following services:
- Routing services, service request, transfer of messages, and substantially all other functions specified by GSM standards.
- Change of dedicated channels (handover), including hard handovers as described hereinbelow and CDMA-to-CDMA soft and "softer" handovers.
- Mode settings for the RR channel, including transmission mode, type of channel and coding/ decoding/transcoding mode.
- MS parameters management based on IS-95 specifications.
- MS classmark management based on GSM specifications.

It will be understood by those skilled in the art that the above features of the RR layer are listed only by way of a summary, and that additional details and features may be added based on published GSM and CDMA specifications.

Fig. 3A is a block diagram that schematically illustrates protocol stacks used in signaling interfaces between MS 40, CDMA BSS 32 and GSM MSC 24, in accordance with a preferred embodiment of the present invention. These interfaces enable MS 40 to communicate with GSM MSC 24 over a CDMA air interface. Operation of these interfaces, and particularly message flow through these interfaces, is described in greater detail in the above-mentioned PCT patent application PCT/US96/20764 and incorporated herein by reference. When MS 40 is in communication with MSC 24 via GSM BSS 30, the protocol stacks are in accordance with GSM standards, substantially without modification.

As noted hereinabove, MS 40 exchanges signals with CDMA BSS 32 over the CDMA Um interface, wherein the MS and BSS protocol stacks are modified to include the GSM-CDMA RR layer and Layer 2. In Fig. 3A, a relay layer is shown explicitly in the BSS 32 protocol stack, for conveying RIL3-CM and MM signaling between MS 40 and MSC 24, largely without processing by BSS 32. Other layers involved in the Um interface were described hereinabove with reference to Fig. 2A.

CDMA BSS 32 communicates with GSM MSC 24 over a standard, substantially unmodified GSM A-interface. This interface is based on the GSM SS7 and BSS Application Part (BSSAP) protocols, as are known in the art, preferably in accordance with the GSM 08.08 standard. BSSAP supports procedures between MSC 24 and BSS 32 that require interpretation and processing of information related to single calls and resource management, as well as transfer of call control and mobility management messages between MSC 24 and MS 40. BSS 32 translates CDMA Layer 1 and GSM-CDMA Layer 2 and RR protocols exchanged between the BSS and MS 40 into appropriate SS7 and BSSAP protocols for transmission to MSC 24, and vice versa.

Because CDMA BSC 34 communicates with GSM MSC 24 using the standard A-interface, substantially no modifications are required in the core GSM MSC in order to enable the addition of CDMA BSS 32 to GSM system 20. Furthermore, MSC 24 need not be aware that there is any difference in identity between GSM/TDMA BSS 30 and CDMA BSS 32, since both communicate with the MSC in a substantially identical manner over the A-interface. Preferably, cells associated with BTSs 36 of BSS 32 are mapped by MSC 24 in substantially the same manner as GSM/TDMA cells, and are thus assigned GSM absolute radio frequency channel number (ARFCN) and base station identity code (BSIC) values, in accordance with the GSM standard. From the point of view of MSC 24, a handover between GSM BSS 30 and CDMA BSS 32, or even between two different CDMA BSSs, is no different from a handover between two GSM BSSs in a conventional GSM/TDMA-based system. The BSIC of the CDMA cells is assigned so as to be distinguishable within system 20 from conventional GSM cells.

Fig. 3B is a block diagram that schematically illustrates protocol stacks involved in conveying voice data between MS 40 and MSC 24 via CDMA BSS 32, in accordance with a preferred embodiment of the present invention. Voice data between MS 40 and BSS 32 are coded and decoded by a CDMA vocoder, which may comprise any of the standard IS-95 vocoder protocols known in the art. BSS 32 translates CDMA Layer 1 into GSM E1 TDMA signals, and converts the CDMA vocoded data into PCM A-law companded voice data, in accordance with the requirements of the A-interface standard. MSC 24 thus transmits and receives voice data to and from MS 40 via BSS 32 substantially without regard to the fact that the data between the BSS and the MS are CDMA-encoded, as though MS 40 were operating in GSM/TDMA mode.

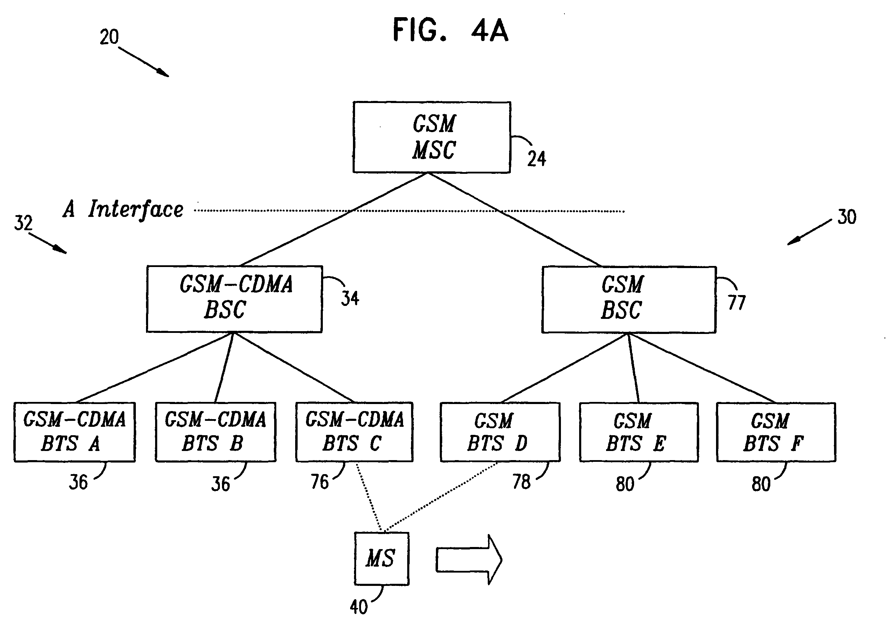

Fig. 4A is a schematic block diagram showing details of system 20, useful in understanding a method for mobile-assisted handover of MS 40 from CDMA BSS 32 to GSM BSS 30, in accordance with a preferred embodiment of the present invention. Unlike Fig.1, BSS 30 is shown here in detail to include a BSC 77 and a plurality of BTSs 78 and 80. Fig. 4A illustrates the handover of MS 40 from one of the BTSs associated with BSS 32, labeled here BTS 76, to BTS 78 of BSS 30. BSS 32 also includes GSM-CDMA BSC 34 and BTSs 36, as described with reference to Fig.1.

The handover from CDMA BTS 76 to TDMA BTS 78 is preferably initiated by BSS 32 when it is determined that MS 40 is in a location in which such a handover might be desirable. This situation may arise when the signal received from BTS 76 is weak, or when MS 40 is known to be reaching the edge of a CDMA coverage area, or when traffic on CDMA channels is heavy. Alternatively, BSS 32 may instruct MS 40 to seek a signal from BTS 78 (or other GSM BTSs) from time to time independently of any specific pressure to do so.

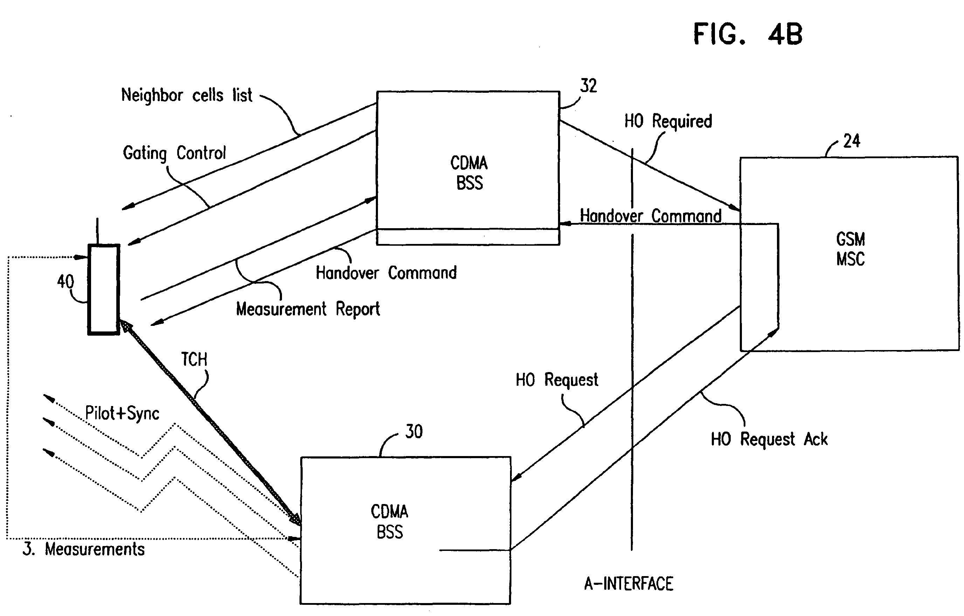

Fig. 4B is a schematic signal flow diagram, illustrating signals conveyed between MS 40, BSSs 30 and 32 and MSC 24 in the handover process of Fig. 4A, in accordance with a preferred embodiment of the present invention. BSC 34 instructs MS 40 to begin a gated search for neighboring GSM BTSs, wherein for brief periods, MS 40 interrupts its communications with BTS 76 to search for and receive TDMA signals. Preferably, MS 40 is operating on the IS95 standard, which enables CDMA transmission to be idle for the duration of a 20 msec frame, during which the GSM TDMA neighbor scan can take place without substantially interrupting CDMA voice communications. Alternatively, such an idle period may also be introduced under other CDMA standards, as well. Further alternatively, as noted hereinabove, MS 40 may comprise separate TDMA and CDMA transceivers that can be used simultaneously for this purpose.

Preferably, BSC 34 provides MS 40 with a list of the frequencies of neighboring GSM TDMA cells, such as those associated with BTSs 78 and 80. Such a list is useful in reducing the time needed to search for and find BTS 78, since MS 40 will search only at the frequencies of the cells on the list. The list is updated as MS 40 moves from one cell to another and is maintained during handovers between TDMA and CDMA base stations.

When MS 40 receives a signal at the frequency of BTS 78, it attempts to decode the GSM frequency correction (FCCH) and synchronization (SCH) channels in the signal. This decoding may take several of the gated CDMA idle periods to complete. Once decoding is successfully accomplished, MS 40 determines the power level of the TDMA signal and reports it to BSS 32 together with the GSM cell identity. Based on this information, the BSS determines whether and when a handover is to take place. At an appropriate time, BSS 32 initiates a handover request to MSC 24. MSC 24 conveys the handover request to GSM BSS 30, which acknowledges the request. GSM BSS 30 then conveys a handover command via MSC 24 and CDMA BSS 32 to MS 40, and GSM BSS 30 opens a new traffic channel (TCH) with the MS. At this point the handover is complete, and MS 40 switches over to BTS 78.

The decision to initiate the handover may take place whenever the signal from GSM BTS 78 becomes stronger than that of CDMA BTS 76, but preferably other criteria are applied. For example, since CDMA channels typically offer better transmission quality than GSM channels, the handover is preferably initiated only when the GSM signal is stronger than the CDMA signal by some predetermined weighting factor. The factor may be preprogrammed in system 20, or it may be set by a user of MS 40. It may also be adjusted dynamically in response to such parameters as the geographical location of the MS and the relative amounts of traffic on the CDMA and TDMA channels in the system.

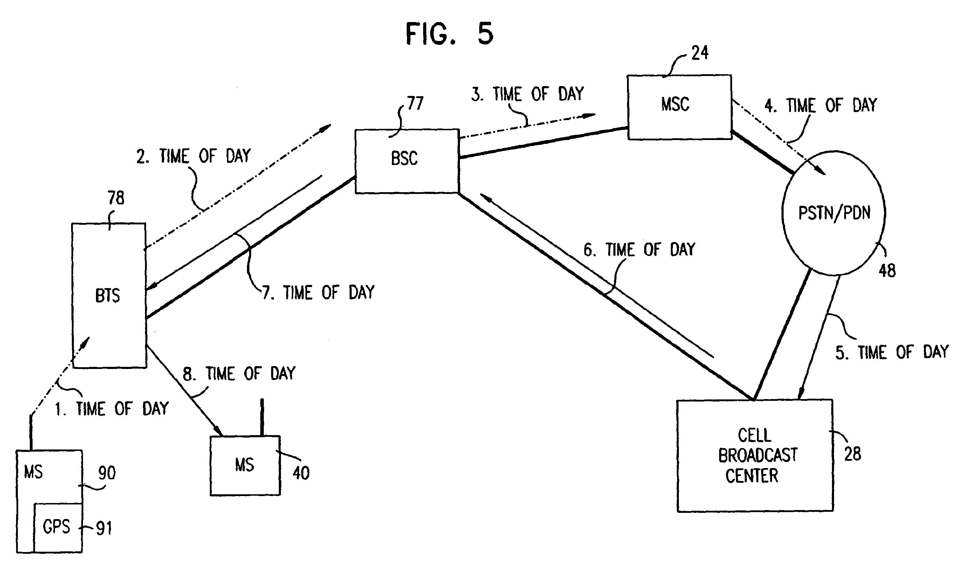

Fig. 5 is a schematic block diagram showing signal flow in system 20 (Fig. 1) associated with providing the time of day to relevant GSM BSCs and BTSs in the system. Ordinarily, GSM BSSs in system 20 would not be informed of the time of day, since this information is not required by the GSM standard. On the other hand, the IS-95 standard requires that CDMA base stations be synchronized, since such synchronization is necessary for identification and decoding of the signals and for soft handover between cells. Therefore, for mobile-assisted handover of MS 40 from TDMA BTS 78 to CDMA 76 (as shown in Fig. 4A, but with the direction of the handover arrow reversed), it is necessary that the time of day be provided by system 20.

The method of Fig. 5 allows the time of day to be provided in system 20 without the necessity of hardware or software changes in MSC 24 or in GSM BSS 30 or BTSs 78 and 80, by using CBC 28, which is a standard part of PLMN 22, to broadcast the time of day over the system. Ordinary, CBC 28 provides a cell broadcast service (CBS) in accordance with GSM interface standards 03.41 and 03.49, enabling general short messages to be broadcast unacknowledged to defined geographical areas within system 20. The messages are received by MS 40 while it is in standby, or idle, mode (i.e., when the MS is not involved in a telephone call). For the purpose of providing time of day information, however, MS 40 is preferably capable of receiving CBS messages not only when it is in an idle mode, as prescribed by GSM standards, but also when the MS is in a dedicated mode, i.e., during a telephone call. The use of the CBS to provide time-of-day information to MS 40 is desirable particularly when the. MS includes only a single radio transmitter and receiver, as shown in Fig. 2B; when dual radios are used, one for CDMA and the other for TDMA, the CDMA radio can receive the time of day while the TDMA radio is in use in a telephone call.

CBS messages may also be used to initiate a search by MS 40 for neighboring cells, as described above with reference to Fig. 4B.

A special MS 90, which is equipped with a GPS (global positioning system) receiver 91, is located in one or more of the GSM/TDMA cells of system 20 in which the time of day is needed. In Fig. 5, MS 90 receives the time of day from receiver 91 and associates the time with an identification of the concurrent TDMA frame number, based on synchronization signals transmitted by BTS 78, in accordance with the GSM standard. Alternatively, MS 90 may be configured to receive the time of day from a CDMA BSS, in which case GPS receiver 91 is not required. MS 90 opens a data call via BTS 78, BSC 77, MSC 24 and PSTN/PDN 48 to CBC 28, and sends to the CBC the cell identification and correspondence of the current time of day and frame number. Alternatively, MS 90 may convey the information by any other suitable method, such as using the GSM SMS. CBC 28 then transmits this information over the CBS to the cell, so that MS 40 receives the time of day even when it is operating in GSM/TDMA mode. Therefore, when MS 40 is to be handed over to CDMA BTS 76, there is no need to acquire synchronization/time of day information from the CDMA BTS, and the handover can proceed more rapidly and smoothly.

Introducing the time of day into system 20 also has benefits for the GSM portion of the system in itself, without connection to CDMA handover. For example, MS 40 can transmit its time of day to different GSM BTSs 78 and 80, and the timing delay from the MS to each of the BTSs can be measured and used to determine the location of the MS.

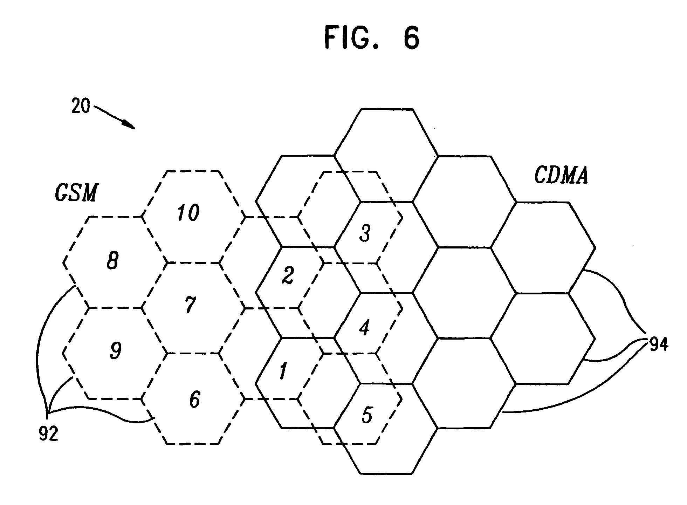

Fig. 6 is a schematic map of overlapping GSM/TDMA cells 92 and CDMA cells 94 in network 20, illustrating aspects of mobile-assisted handover from GSM BTS 78 to CDMA BTS 76, in accordance with a preferred embodiment of the present invention. An operator of system 20 will recognize that when MS 40 is located in any of cells 1-5 shown in Fig. 6, a TDMA/CDMA handover may take place. Therefore, CBC 28 will broadcast a CBS message to all dual-mode (GSM/CDMA) MSs in these cells, including the following information and instructions:
- MS to begin search for CDMA signals (search trigger).
- Frequencies of CDMA BTSs in overlapping and neighboring cells.
- GSM mapping of CDMA cells 94, according to GSM MSC 24.
- Identification of the time of day with the current TDMA frame number, preferably as derived from MS 90, although other methods may also be used to supply the time of day.
- Optionally, the factor by which the CDMA signal strength is to be multiplied for comparison with the TDMA signal, as described hereinabove.
There is no need for such a message to be broadcast in cells 6-10. Furthermore, it will be understood that only the dual-mode MSs are programmed to receive and interpret this message, while ordinary GSM/TDMA MSs will ignore it. The CBS message triggers and enables the dual-mode MSs to gather and provide information to GSM BSS 30 and MSC 24 for assistance in making the handover to one of the CDMA BSSs, unlike hybrid GSM/CDMA systems that have been suggested in the prior art.

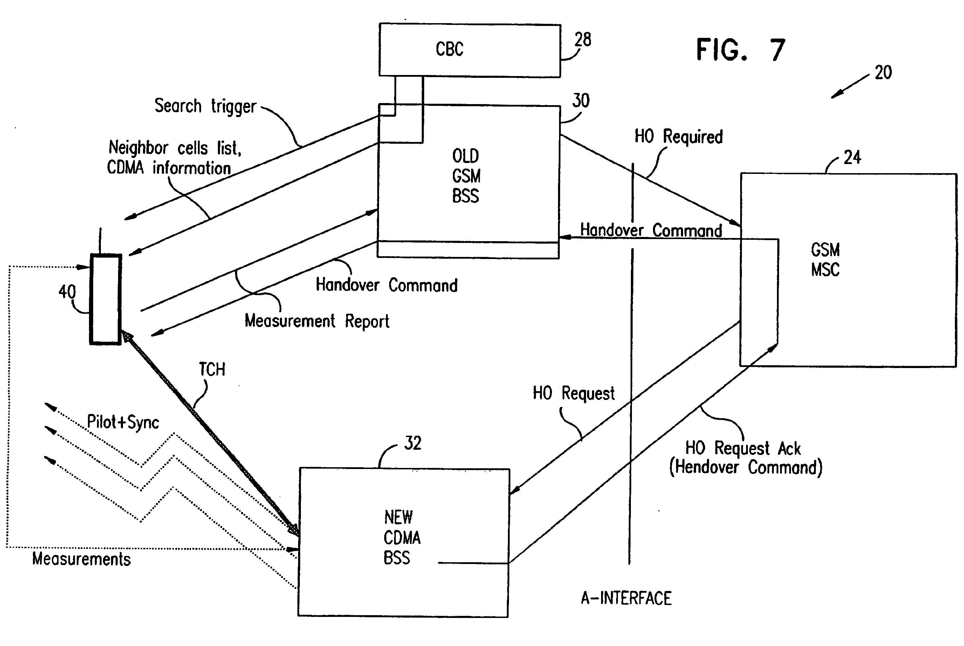

Fig. 7 is a block diagram illustrating signal flow in system 20 associated with a mobile-assisted handover from BTS 78 to BTS 76, in accordance with a preferred embodiment of the present invention. As noted above with reference to Fig. 6, the handover begins with the transmission of the search trigger and other information. The search trigger is transmitted periodically by BTS 78 whenever MS 40 is in one of GSM cells 1-5 (Fig. 6), or in response to some other preprogrammed condition.

Upon receiving the trigger, MS 40 switches off its TDMA traffic with BTS 78 and tunes its receiver to an appropriate CDMA frequency for a short period, preferably for about 5 msec. Then, after the MS has resumed communicating with BTS 78, it attempts to decode any CDMA signal it received in order to identify a pilot beam of the BTS whose transmission it has received, say from BTS 76. As noted above, BTS 76 is mapped in system 20 as though it were a conventional GSM/TDMA BTS. MS 40 therefore transmits a report message back to GSM BTS 78 indicating the power of the signal it received from BTS 76 (optionally multiplied by the relative CDMA/TDMA weighting factor mentioned above), together with the GSM system map identification of BTS 76. From the point of view of GSM BSS 30 and MSC 24, there is no substantial difference between the message transmitted by MS 40 in this case and the message that would be transmitted as the result of an ordinary GSM neighbor scan.

This process of measurement and reporting goes on until BSS 30 determines that MS 40 should be handed over to BTS 76. At this point, BSS 30 conveys a message to MSC 24 indicating that the handover is required. MSC 24 passes a handover request on to BSS 32, which sends an acknowledgment back via MSC 24 to BSS 30. GSM BSS 30 then gives a handover command to MS 40, and a traffic channel is opened between MS 40 and CDMA BTS 76, completing the handover.

The process described above thus allows mobile-assisted handover from GSM/TDMA BSS 30 to CDMA BSS 32 with high speed and reliability, and with minimal interruption to service in the middle of a call during which the handover takes place. For the purposes of this handover, GSM cells in system 20 receive time of day information, and the CDMA cells are mapped into the GSM system, at minimal hardware expense and substantially without the necessity of reprogramming existing GSM system elements.

A similar TDMA-CDMA handover process may be carried out even in the absence of time-of-day information at GSM BSS 30. In this case, after MS 40 has acquired a pilot channel signal associated with BTS 76, it must tune in to and decode the CDMA sync channel of the BTS in order to derive the time of day. This operation takes about 300 msec, creating a noticeable but still tolerable interruption in voice service during a call. Further alternatively, a similar handover process can be performed using a MS having two transceivers, one for TDMA and the other for CDMA, as described hereinabove.

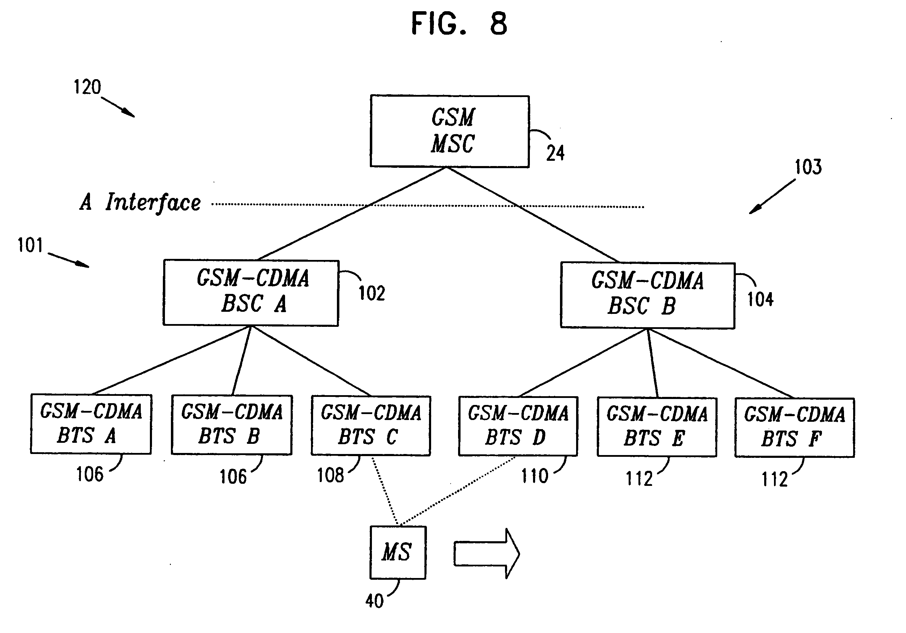

Fig. 8 is a schematic block diagram illustrating handover between two different CDMA BSSs 101 and 103 within system 20, in accordance with a preferred embodiment of the present invention. BSS 101 comprises a BSC 102 and a plurality of BTSs 106 and 108; and BSS 103 comprises a BSC 1-04 and a plurality of BTSs 110 and 112. BSSs 101 and 103 are substantially similar to and interchangeable with BSS 32, shown in Fig. 1 and described hereinabove, and communicate with GSM MSC 24 via the GSM A-interface. MS 40 is shown in the figure in the midst of a handover from BTS 108 to BTS 110, under the control of MSC 24. Although the handover takes place between two CDMA BSSs, from the point of view of the system, it is a handover between two GSM BSSs, wherein BTSs 108 and 110 are respectively mapped by MSC 24 as GSM cells.

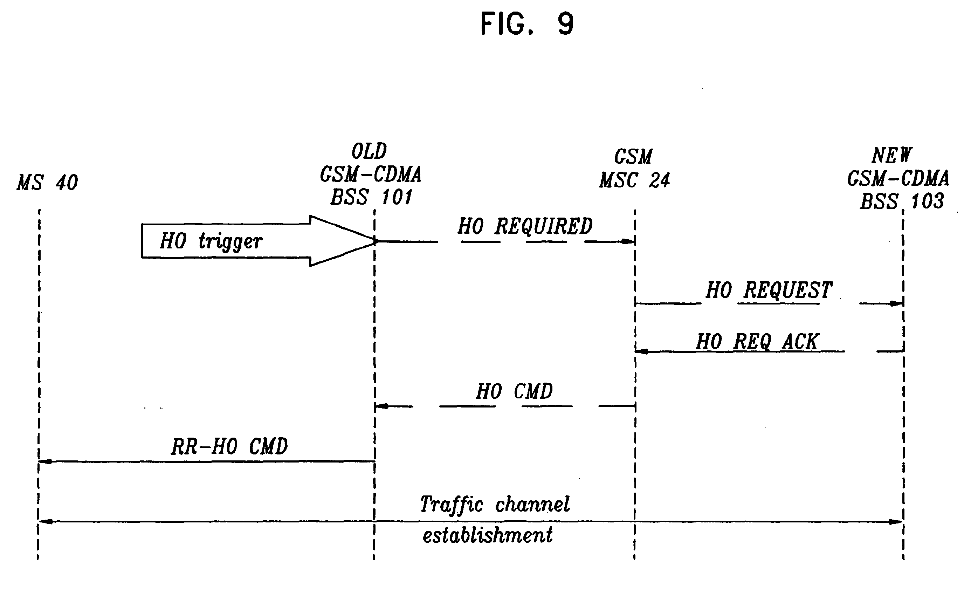

Fig. 9 is a schematic diagram illustrating signal flow between the elements of system 20 shown in Fig. 8 in the course of the handover, in accordance with a preferred embodiment of the present invention. The handover is triggered when MS 40 reports to BSS 101 that it is receiving a signal from BTS 110 with a higher power level than that of BTS 108. BSS 101 then sends a standard GSM handover-required message to MSC 24, specifying the GSM cell identity of BTS 110 as the new cell assignment desired for the handover. MSC 24 sends a handover request to BSS 103, which responds by sending to the MSC an acknowledgment that encapsulates a RIL3-RR handover command message, which is passed back to BSS 101. Thus, all of the messages sent between BSSs 101 and 103 comply with A-interface requirements, and CDMA parameters associated with IS95 are mapped to corresponding GSM parameters, for example, identification of vocoder type 13K QCELP in CDMA to GSM full rate vocoder. The handover request, acknowledge and command are passed on by MSC 24 substantially without change.

After receiving the handover command, old BSS 101 sends the RR handover command message to MS 40 so as to effect the handover to new BSS 103. The message to MS 40 includes:
- A new long code mask, in accordance with CDMA standards
- Nominal power level parameters
- Frame offset
- Code channel
- Layer 2 acknowledgment numbering
- Forward traffic channel power control parameters
- Number of preamble
- New band class and frequency.

Although preferred embodiments are described hereinabove with reference to a particular hybrid GSM/CDMA system, it will be appreciated that the principles of the present invention may similarly be applied to effect mobile-assisted handovers in other hybrid communication systems, as well. Moreover, although the preferred embodiments make reference to specific TDMA- and CDMA-based communications standards, those skilled in the art will appreciate that the methods and principles described hereinabove may also be used in conjunction with other methods of data encoding and signal modulation. The scope of the present invention encompasses not only the complete systems and communications processes described hereinabove, but also various innovative elements of these systems and processes, as well as combinations and sub-combinations thereof.

It will thus be appreciated that the preferred embodiments described above are cited by way of example, and the full scope of the invention is limited only by the claims.

## Claims

1. A method for handing over a mobile station (40) in communication with a first base station (32) over a first air interface in a mobile wireless telecommunications system (20), to a second base station (30) operating according to a second air interface, the method comprising the steps of:
receiving at the mobile station (40) a signal sent over the second air interface from the second base station while maintaining a communications link with the first base station,
sending data responsive to the received signal from the mobile station (40) to the first base station (32) over the first air interface,
handing over the mobile station (40) from the first to the second base station (30) responsive to the data received from the mobile station,
**characterised in that**:
the first base station (32) is one of a CDMA or TDMA base station, wherein the first air interface is a CMDA or TDMA air interface respectively, and
the second base station (30) is the other of a CDMA or TDMA base station, wherein the second air interface is a CMDA or TDMA air interface respectively.

2. A method according to claim 1, wherein the data comprises a measurement of signal strength, and wherein handing over the mobile station (40) comprises comparing measurements of signal strengths from the first and second base stations and handing over the mobile station responsive to the comparison.

3. A method according to claim 2, further comprising applying a weighting factor to the measurement of signal strength.

4. A method according to claim 3, wherein applying the weighting factor comprises varying the factor according to a network condition in the system.

5. A method according to claim 3, wherein applying the weighting factor comprises transmitting a weighting factor over the communications link to the mobile station (40), which applies the weighting factor to the measurement.

6. A method according to claim 1, wherein the data comprises an identification of the second base station (30) based on decoding by the mobile station of the signal received over the second air interface.

7. A method according to claim 1, further comprising transmitting from the first base station (32) to the mobile station a list of frequencies of base stations of the second type in the system, such that the mobile station seeks to receive the signal at a frequency in the list.

8. A method according to claim 1, wherein handing over the mobile station comprises transmitting a handover command from the first base station.

9. A method according to claim 1, wherein receiving the signal at the mobile station uses a single RF transceiver in the mobile station.

10. A method according to any preceding claim, wherein the TDMA interface comprises a GSM interface, and wherein the CDMA interface is configured to convey GSM network messages.

11. A method according to any preceding claim, wherein the CDMA interface is based on an IS-95 standard.

12. A method according to claim 10, wherein a single radio resource management protocol layer is used to manage the first air interface, and wherein handing over the mobile station comprises using the single radio resource management protocol layer to manage the second air interface.

13. A method according to claim 1, further comprising defining an area of overlap between a first region served by the first air interface and a second region served by the second air interface, and triggering the mobile station to receive the signal when the mobile station is in the area of overlap.

14. A method according to any preceding claim, wherein the first air interface comprises a CDMA interface, and wherein the second air interface comprises a GSM/TDMA interface, and wherein receiving the signal at the mobile station comprises gating the mobile station to interrupt a CDMA communications link so as to receive and decode a GSM/TDMA signal.

15. A method according to claim 14, wherein gating the mobile station comprises interrupting CDMA communications for the duration of an IS-95 frame.

16. A method according to claim 14, wherein sending the data comprises sending an identification of the second base station based on decoding of GSM frequency correction and synchronization channels of the signal by the mobile station.

17. A method according to claim 1, wherein the first air interface comprises a GSM/TDMA interface, and the second air interface comprises a CDMA interface, and wherein receiving the signal at the mobile station comprises controlling the mobile station to interrupt the communications link so as to receive and decode a CDMA signal.

18. A method according to claim 17, further comprising conveying a GSM cell broadcast service message to the mobile station to initiate a search by the mobile station for a signal from a base station of the second type.

19. A method according to claim 18, wherein conveying the GSM cell broadcast service message to the mobile station comprises conveying the message so as to be received by the mobile station while the mobile station is operating in a dedicated mode.

20. A method according to claim 17, wherein sending the data from the mobile station comprises sending an identification of a CDMA pilot beam decoded by the mobile station.

21. A method according to claim 17, further comprising mapping the second base station as a GSM base station so as to control the handover.

22. A method according to claim 17, wherein controlling the mobile station comprises controlling the mobile station to receive the CDMA signal during a first TDMA time slot and to decode the signal during a subsequent TDMA time slot while communicating with the base station over the TDMA interface so as to generate the data to be sent by the base station.

23. The method of claim 1 wherein the mobile wireless telecommunications system (20) is a GSM mobile wireless telecommunications system, the method further comprising:
mapping the CDMA base station that operates according to the CDMA air interface as a GSM/TDMA base station;
comparing the strength of the signal sent over the second air interface from the second base station with the strength of a signal received over the first air interface from the first base station, substantially as though both the first and second base stations were GSM/TDMA base stations; and
handing over the mobile station from the first to the second base station responsive to comparison of the signal strengths.

24. A method according to claim 23, wherein mapping the CDMA base station comprises assigning to the base station a GSM frequency and location.

25. A method according to claim 23, further comprising conveying messages between the first and second base stations and a mobile switching center in the system via a GSM A-interface.

26. A method according to claim 25, wherein both the first and second base stations operate according to the CDMA air interface.

27. A method according to claim 26, wherein handing over the mobile station comprises conveying a new IS-95 long code through the A-interface, substantially without violating A-interface protocols.

28. A method according to claim 23, further comprising applying a weighting factor to the second signal, and wherein comparing the strengths of the signals comprises comparing the weighted signal.

29. A method according to claim 28, wherein applying the weighting factor comprises conveying the weighting factor to the mobile station, which applies the weighting factor to the second signal.

30. A method according to claim 28, wherein applying the weighting factor comprises varying the factor according to a network condition in the system.

31. Wireless communications apparatus, for use in a wireless mobile telecommunications system (20), comprising:
a base station (32) of a first type which transmits and receives a first signal according to a first air interface;
a base station (30) of a second type which transmits and receives a second signal according to a second air interface; and
a mobile station (40), which receives the second signal over the second air interface from the base station of the second type while maintaining a communication link over the first air interface with the base station of the first type, and which transmits data to the base station of the first type responsive to the second signal so that the mobile station is handed over from the first to the second base station responsive to the transmitted data.
**characterised in that**:
the first base station is one of a CDMA or TDMA base station, wherein the first air interface is a CMDA or TDMA air interface respectively, and
the second base station is the other of a CDMA or TDMA base station, wherein the second air interface is a CMDA or TDMA air interface respectively.

32. Apparatus according to claim 31, wherein the data transmitted by the mobile station comprises a measurement of signal strength, such that the mobile station is handed over responsive to a comparison of signal strengths of the first and second signals.

33. Apparatus according to claim 32, wherein a weighting factor is applied to the measurement of signal strength.

34. Apparatus according to claim 33, wherein the weighting factor is varied according to a network condition in the system.

35. Apparatus according to claim 32, wherein the weighting factor is transmitted over the communications link to the mobile station, which applies the weighting factor to the measurement.

36. Apparatus according to claim 31, wherein the mobile station decodes the second signal to determine an identification of the base station of the second type.

37. Apparatus according to claim 31, wherein the base station of the first type transmits to the mobile station a list of frequencies of mobile stations of the second type in the system, such that the mobile station seeks to receive the second signal at a frequency in the list.

38. Apparatus according to claim 31, wherein the base station of the first type transmits a handover command to the mobile station, whereby the mobile station is handed over from the first to the second base station.

39. Apparatus according to claim 31, wherein the mobile station comprises a single RF transceiver (42) which communicates with both the base stations of the first and second types.

40. Apparatus according to any of claims 31 to 39, wherein the TDMA interface comprises a GSM interface, and wherein the CDMA interface is configured to convey GSM network messages.

41. Apparatus according to any of claims 31 to 40, wherein the CDMA interface is based on an IS-95 standard.

42. Apparatus according to any of claims 31 to 41, wherein the mobile station uses a single radio resource management protocol layer to manage both the first and second air interfaces.

43. Apparatus according to claim 31, wherein the base station triggers the mobile station to receive the second signal over the second air interface when the mobile station is in an area of overlap between a first region served by the first air interface and a second region served by the second air interface.

44. Apparatus according to claim 31, wherein the first air interface comprises a CDMA interface, and wherein the second air interface comprises a GSM/TDMA interface, and wherein the base station of the first type gates the mobile station to interrupt the communications link so as to receive and decode a GSM signal.

45. Apparatus according to claim 44, wherein the mobile station interrupts the link for the duration of an IS-95 frame.

46. Apparatus according to claim 44, wherein the mobile station processes the second signal to decode GSM frequency correction and synchronization channels of the signal.

47. Apparatus according to claim 31, wherein the first air interface comprises a GSM/TDMA interface, and the second air interface comprises a CDMA interface, and wherein the base station of the first type controls the mobile station to interrupt the communications link so as to receive and decode a CDMA signal.

48. Apparatus according to claim 47, and comprising a GSM cell broadcast center (28), which conveys a cell broadcast service message to the mobile station to initiate a search by the mobile station for the second signal.

49. Apparatus according to claim 48, wherein the mobile station receives the cell broadcast service message while the mobile station is operating in a dedicated mode.

50. Apparatus according to claim 47, wherein the mobile station processes the CDMA signal to identify a CDMA pilot beam.

51. Apparatus according to claim 47 further comprising means for mapping the second base station as a GSM base station so as to control the handover.

52. Apparatus according to claim 47, wherein the mobile station receives the CDMA signal during a first TDMA time slot and processes the signal during a subsequent TDMA time slot while communicating with the base station over the TDMA interface so as to generate the data for transmission to the base station.

53. The apparatus of claim 31 wherein the mobile wireless telecommunications (20) is a GSM telecommunications system, the apparatus further comprising:
means for mapping said CDMA base station in the GSM system as a GSM base station, wherein the mobile station is handed over from the first to the second base station responsive to a comparison of the strengths of the first and second signals received by the mobile station, substantially as though both the first and second base stations operated according to a GSM/TDMA air interface.

54. Apparatus according to claim 53, wherein the CDMA base station is assigned a GSM frequency and location in the system.

55. Apparatus according to claim 53, wherein messages are conveyed between the first and second base stations and a mobile switching center in the system via a GSM A-interface.

56. Apparatus according to claim 55, wherein both the first and second signals comprise CDMA signals.

57. Apparatus according to claim 56, wherein a new IS-95 long code is conveyed through the A-interface from the second to the first base station in order to hand over the mobile station, substantially without violating A interface protocols.

58. Apparatus according to claim 53, wherein the mobile station applies a weighting factor to the second signal before the signal strengths are compared.

## Patentansprüche

1. Ein Verfahren zum Übergeben einer Mobilstation (40), die sich in Kommunikation mit einer ersten Basisstation (32) über eine erste Luftschnittstelle in einem Mobil-Drahtlos-Telekommunikationssystem (20) befindet zu einer zweiten Basisstation (30), die gemäß einer zweiten Luftschnittstelle (air interface) operiert, wobei das Verfahren folgende Schritte aufweist:
Empfangen an der Mobilstation (40) eines Signals, das über die zweite Luftschnittstelle von der zweiten Basisstation gesendet wurde, während eine Kommunikationsverbindung mit der ersten Basisstation unterhalten wird,
Senden von Daten, ansprechend auf das empfangene Signal von der Mobilstation (40) zu der ersten Basisstation (32) über die erste Luftschnittstelle,
Übergeben der Mobilstation (40) von der ersten zu der zweiten Basisstation (30), ansprechend auf die Daten, empfangen von der Mobilstation, **gekennzeichnet dadurch, dass**:
die erste Basisstation (32) eine von einer CDMA- oder TDMA-Basisstation ist, wobei die erste Luftschnittstelle eine CDMA- bzw. TDMA-Luftschnittstelle ist, und
die zweite Basisstation (30), die andere einer CDMA- oder TDMA-Basisstation ist, wobei die zweite Luftschnittstelle eine CDMA- bzw. TDMA-Luftchnittstelle ist.

2. Verfahren gemäß Anspruch 1, wobei die Daten eine Messung einer Signalstärke aufweisen, und wobei das Übergeben der Mobilstation (40) das Vergleichen von Messungen von Signalstärken von der ersten und zweiten Basisstationen und das Übergeben der Mobilstation, ansprechend auf den Vergleich, aufweist.

3. Verfahren gemäß Anspruch 2, das weiterhin das Anwenden eines Gewichtungsfaktors auf die Messung von Signalstärke aufweist.

4. Verfahren gemäß Anspruch 3, wobei das Anwenden des Gewichtungsfaktors das Variieren des Faktors gemäß einer Netzwerkbedingung in dem System aufweist.

5. Verfahren gemäß Anspruch 3, wobei das Anwenden des Gewichtungsfaktors das Senden eines Gewichtungstaktors über die Kommunikationsverbindung der Mobilstation (40) aufweist, die den Gewichtungsfaktor auf die Messung anwendet.

6. Verfahren gemäß Anspruch 1, wobei die Daten eine Identifikation der zweiten Basisstation (30) aufweisen, und zwar basierend auf dem Decodieren des über die zweite Luftschnittstelle gesendeten Signals durch die Mobilstation.

7. Verfahren gemäß Anspruch 1, das weiterhin das Senden von der ersten Basisstation (32) zu der Mobilstation einer Liste von Frequenzen von Basisstationen des zweiten Typs in dem System aufweist, so dass die Mobilstation danach strebt, das Signal mit einer Frequenz in der Liste zu empfangen.

8. Verfahren gemäß Anspruch 1, wobei das Übergeben der Mobilstation das Senden eines Übergabebefehls von der ersten Basisstation aufweist.

9. Verfahren gemäß Anspruch 1, wobei das Empfangen des Signals an der Mobilstation einen einzelnen HF-Transceiver in der Mobilstation verwendet.

10. Verfahren gemäß einem der vorhergehenden Ansprüche, wobei das TDMA-Interface ein GSM-Interface aufweist, und wobei das CDMA-Interface konfiguriert ist zum Übermitteln von GSM-Netzwerknachrichten.

11. Verfahren gemäß einem der vorhergehenden Ansprüche, wobei das CDMA-Interface auf einem IS-95-Standard basiert.

12. Verfahren gemäß Anspruch 10, wobei eine Einzel-Funkressource-Managementprotokollschicht verwendet wird, um die erste Luftschnittstelle zu managen, und wobei das Übergeben der Mobilstation das Verwenden der Einzel-Funkressource-Managementprotokollschicht aufweist, um die zweite Luftschnittstelle zu managen.

13. Verfahren gemäß Anspruch 1, das weiterhin Folgendes aufweist:
Definieren eines Überlappungsbereichs zwischen einer ersten Region, versorgt durch die erste Luftschnittstelle, und einer zweiten Region, versorgt durch die zweite Luftschnittstelle, und Veranlassen, dass die Mobilstation das Signal empfängt, wenn die Mobilstation in dem Überlappungsbereich ist.

14. Verfahren gemäß einem der vorhergehenden Ansprüche, wobei die erste Luftschnittstelle eine CDMA-Schnitstelle bzw. -Interface aufweist, und wobei die zweite Luftschnittstelle ein GSM/TDMA-Interface aufweist, und wobei das Empfangen des Signals an der Mobilstation das Gaten bzw. An- und Ausblenden der Mobilstation aufweist, um eine CDMA-Kommunikationsverbindung zu unterbrechen, um so ein GSM/TDMA-Signal zu empfangen und zu decodieren.

15. Verfahren gemäß Anspruch 14, wobei das Gaten der Mobilstation das Unterbrechen von CDMA-Kommunikationen für die Dauer eines IS-95-Rahmens aufweist.

16. Verfahren gemäß Anspruch 14, wobei das Senden der Daten das Senden einer Identifikation der zweiten Basisstation, basierend auf dem Decodieren von GSM-Frequenz-Korrektur- und Synchronisationskanälen des Signals durch die Mobilstation aufweist.

17. Verfahren gemäß Anspruch 1, wobei die erste Luftschnittstelle ein GSM/TDMA-Interface aufweist und die zweite Luftschnittstelle ein CDMA-Interface aufweist, und wobei das Empfangen des Signals an der Mobilstation das Steuern der Mobilstation aufweist, um die Kommunikationsverbindung zu unterbrechen, um so ein CDMA-Signal zu empfangen und zu decodieren.

18. Verfahren gemäß Anspruch 17, das weiterhin das Übermitteln einer GSM-Zellbroadcast-Dienstnachricht an die Mobilstation aufweist, um eine Suche der Mobilstation nach einem Signal von einer Basisstation des zweiten Typs zu initiieren.

19. Verfahren gemäß Anspruch 18, wobei das Übermitteln der GSM-Zellbroadcast-Dienstnachricht zu der Mobilstation das Übermitteln der Nachricht aufweist, um so von der Mobilstation empfangen zu werden, während die Mobilstation in einem dedizierten Modus operiert.

20. Verfahren gemäß Anspruch 17, wobei das Senden der Daten von der Mobilstation das Senden einer Identifikation eines CDMA-Pilotbeams bzw. -strahls, decodiert von der Mobilstation, aufweist.

21. Verfahren gemäß Anspruch 17, das weiterhin das Abbilden der zweiten Basisstation als eine GSM-Basisstation aufweist, um so die Übergabe zu steuern.

22. Verfahren gemäß Anpruch 17, wobei das Steuern der Mobilstation das Steuern der Mobilstation aufweist, um das CDMA-Signal während eines ersten TDMA-Zeitschlitzes zu empfangen und das Signal während eines nachfolgenden CDMA-Zeitschlitzes zu decodieren, während mit der Basisstation über die TDMA-Schnittstelle kommuniziert wird, um so die Daten für das Senden zu der Basisstation zu generieren.

23. Das Verfahren gemäß Anspruch 1, wobei das Mobil-Drahtlos-Telekommunikationssystem (20) ein GSM-Mobil-Drahtlos-Telekommunikationssystem ist, wobei das Verfahren weiterhin Folgendes aufweist:
Abbilden der CDMA-Basisstation, die gemäß dem CDMA-Luftinterface bzw. der -schnittstelle operiert als eine GSM/TDMA-Basisstation;
Vergleichen der Stärke des Signals, das über die zweite Luftschnittstelle von der zweiten Basisstation gesendet wird, mit der Stärke eines Signals, empfangen über die erste Luftschnittstelle von der ersten Basisstation, und zwar im Wesentlichen so als ob die ersten und zweiten Basisstationen GSM/TDMA-Basisstationen wären; und
Übergeben der Mobilstation von der ersten zu der zweiten Basisstation, ansprechend auf den Vergleich der Signalstärken.

24. Verfahren gemäß Anspruch 23, wobei das Abbilden der CDMA-Basisstation das Zuweisen an die Basisstation einer GSM Frequenz und Standort aufweist.

25. Verfahren gemäß Anspruch 23, das weiterhin das Übermitteln von Nachrichten zwischen den ersten und zweiten Basisstationen und einer Mobilvermittlungsstelle in dem System über ein GSM A-Interface aufweist.

26. Verfahren gemäß Anspruch 25, wobei beide die ersten und zweiten Basisstationen, gemäß der CDMA-Luftscnittstelle operieren.

27. Verfahren gemäß Anspruch 26, wobei das Übergeben der Mobilstation das Übermitteln eines neuen IS-95-Langcodes über die A-Schnittstelle bzw. das -Interface aufweist, und zwar ohne dabei im Wesentlichen A-Interfaceprotokolle zu verletzen.

28. Verfahren gemäß Anspruch 23, weiterhin das Anwenden eines Gewichtungsfaktors auf das zweite Signal aufweist, und wobei das Vergleichen der Stärken der Sgnale das Vergleichen der gewichteten Signale aufweist.

29. Verfahren gemäß Anspruch 28, wobei das Anwenden des Gewichtungsfaktors das Übermitteln des Gewichtungsfaktors an die Mobilstation, die den Gewichtungsfaktors auf das zweite Signal anwendet, aufweist.

30. Verfahren gemäß Anspruch 28, wobei das Anwenden des Gewichtungsfaktors das Variieren des Faktors gemäß einer Netzwerkbedingung in dem System aufweist.

31. Drahtlose Kommunikationsvorrichtung zur Verwendung in einem Drahtlose-Mobil-Telekommunikationssystem (20), wobei die Vorrichtung Folgendes aufweist:
eine Basisstation (32) eines ersten Typs, die ein erstes Signal gemäß einer ersten Luftschnittstelle sendet und empfängt;
eine Basisstation (30) eines zweiten Typs, die ein zweites Signal gemäß einer zweiten Luftschnittstelle sendet und empfängt; und
eine Mobilstation (40), die das zweite Signal über die zweite Luftschnittstelle von der Basisstation des zweiten Typs empfängt, während eine Kommunikationsverbindung über die erste Luftschnittstelle mit der Basisstation des ersten Typs unterhalten wird, und die Daten zur Basisstation des ersten Typs, ansprechend auf das zweite Signal, sendet, so dass die Mobilstation von der ersten zu der zweiten Basisstation übergeben wird, ansprechend auf die gesendeten Daten, **dadurch gekennzeichnet, dass**
die erste Basisstation eine von einer CDMA- oder TDMA-Basisstation ist, wobei die erste Luftschnittstelle eine CDMA (CMDA)- bzw. TDMA-Luftschnittstelle ist, und
die zweite Basisstation die andere einer CDMA- oder TDMA-Basisstation ist, wobei die zweite Luftschnittstelle eine CDMA- bzw. TDMA-Luftschnittstelle ist.

32. Vorrichtung gemäß Anspruch 31, wobei die Daten gesendet von der Mobilstation eine Messung von Signalstärke aufweisen, so dass die Mobilstation ansprechend auf einen Vergleich der Signalstärken erster und zweiter Signale übergeben wird.

33. Vorrichtung gemäß Anspruch 32, wobei ein Gewichtungsfaktor an die Messung der Signalstärke angewendet wird.

34. Vorrichtung gemäß Anspruch 33, wobei der Gewichtungsfaktor variiert wird gemäß einer Netzwerkbedingung in dem System.

35. Vorrichtung gemäß Anspruch 32, wobei der Gewichtungsfaktor über die Kommunikationsverbindung zu der Mobilstation, die den Gewichtungsfaktor an die Messung anwendet, gesendet wird.

36. Vorrichtung gemäß Anspruch 31, wobei die Mobilstation das zweite Signal decodiert, um eine Identifikation der Basisstation des zweiten Typs zu bestimmen.

37. Vorrichtung gemäß Anspruch 31, wobei die Basisstation des ersten Typs an die Mobilstation eine Liste von Frequenzen von Mobilstationen des zweiten Typs in dem System sendet, so dass die Mobilstation versucht bzw. danach strbt, das zweite Signal mit einer Frequenz in der Liste zu empfangen.

38. Vorrichtung gemäß Anspruch 31, wobei die Basisstation des ersten Typs einen Übergabebefehl an die Mobilstation sendet, wobei die Mobilstation von der ersten zu der zweiten Basisstation übergeben wird.

39. Vorrichtung gemäß Anspruch 31, wobei die Mobilstation einen einzigen HF-Transceiver (42) aufweist, der mit beiden Basisstationen des ersten und zweiten Typs kommuniziert.

40. Vorrichtung gemäß einem der Ansprüche 31 bis 39, wobei die TDMA-Schnittstelle eine GSM-Schnittstelle aufweist, und wobei die CDMA-Schnittstelle konfiguriert ist, um GSM-Netzwerknachrichten zu übermitteln.

41. Vorrichtung gemäß einem der Ansprüche 31 bis 40, wobei die CDMA-Schnittstelle auf einem IS-95-Standard basiert.

42. Vorrichtung gemäß einem der Ansprüche 31 bis 41, wobei die Mobilstation eine Einzel-Funkressource-Managementprotokollschicht verwendet, um die ersten und zweiten Luftschnittstellen zu managen.

43. Vorrichtung gemäß Anspruch 31, wobei die Basisstation veranlasst, dass die Mobilstation das zweite Signal über die zweite Luftschnittstelle empfängt, wenn die Mobilstation sich in einem Überlappungsbereich zwischen einer ersten Region, versorgt durch die erste Luftschnittstelle, und einer zweiten Region, versorgt durch die zweite Luftschnittstelle, befindet.

44. Vorrichtung gemäß Anspruch 31, wobei die erste Luftschnittstelle eine CDMA-Schnittstelle aufweist, und wobei die zweite Luftschnittstelle eine GSM/TDMA-Schnittstelle aufweist, und wobei die Basisstation des ersten Typs die Mobilstation gatet bzw. ein-/aussteuert, um die Kommunikationsverbindung zu unterbrechen, um so ein GSM-Signal zu empfangen und zu decodieren.

45. Vorrichtung gemäß Anspruch 44, wobei die Mobilstation die Verbindung für die Dauer eines IS-95-Rahmens unterbricht.

46. Vorrichtung gemäß Anspruch 44, wobei die Mobilstation das zweite Signal verarbeitet, um GSM-Frequenzkorrektur- und Synchronisationskanäle des Signals zu decodieren.

47. Vorrichtung gemäß Anspruch 31, wobei die erste Luftschnittstelle eine GSM/TDMA-Schnittstelle aufweist, und die zweite Luftschnittstelle ein CDMA-Interface aufweist, und wobei die Basisstation des ersten Typs die Mobilstation steuert, um die Kommunikationsverbindung zu unterbrechen, um so ein CDMA-Signal zu empfangen und zu decodieren.

48. Vorrichtung gemäß Anspruch 47, und eine GSM-Zellbroadcast-Zentrale (28) aufweisend, die eine Zellbroadcast-Dienstnachricht an die Mobilstation übermittelt, um eine Suche durch die Mobilstation nach dem zweiten Signal zu initiieren.

49. Vorrichtung gemäß Anspruch 48, wobei die Mobilstation die Zellbroadcast-Dienstnachricht empfängt, während die Mobilstation in dem dedizierten Modus betrieben wird.

50. Vorrichtung gemäß Anspruch 47, wobei die Mobilstation das CDMA-Signal verarbeitet, um einen CDMA-Pilotstrahl zu identifizieren.

51. Vorrichtung gemäß Anspruch 47, die weiterhin Mittel aufweist zum Abbilden der zweiten Basisstation als eine GSM-Basisstation, um die Übergabe zu steuern.

52. Vorrichtung gemäß Anspruch 47, wobei die Mobilstation das CDMA-Signal empfängt, während eines ersten CDMA-Zeitschlitzes und das Signal während eines nachfolgenden TDMA-Zeitschlitzes verarbeitet, während mit der Basisstation über die TDMA-Schnittstelle kommuniziert wird, um so die Daten für die Übertragung zu der Basisstation zu generieren.

53. Vorrichtung gemäß Anspruch 31, wobei das Mobil-Drahtlos-Telekommunikationsystem (20) ein GSM-Telekommunikationssystem ist, wobei die Vorrichtung weiterhin Folgendes aufweist:
Mittel zum Abbilden der CDMA-Basisstation in dem bzw. in das GSM-System als eine GSM-Basisstation, wobei die Mobilstation von der ersten zu der zweiten Basisstation übergeben wird, ansprechend auf einen Vergleich der Stärken der ersten und zweiten Signale, empfangen durch die Mobilstation, und zwar im Wesentlichen so als ob die ersten und zweiten Basisstationen gemäß der GSM/TDMA-Luftschnittstelle operieren.

54. Vorrichtung gemäß Anspruch 53, wobei der CDMA-Basisstation eine GSM Frequenz und Standort in dem System zugewiesen wird.

55. Vorrichtung gemäß Anspruch 53, wobei die Nachrichten zwischen den ersten und zweiten Basisstationen und einer Mobilvermittlungsstelle in dem System über eine GSM A-Schnittstelle übermittelt werden.

56. Vorrichtung gemäß Anspruch 55, wobei beide, die ersten und zweiten Signale, CDMA-Signale aufweisen.

57. Vorrichtung gemäß Anspruch 56, wobei ein neuer IS-95-Langcode übermittelt wird durch das A-Interface bzw. die Schnittstelle von der zweiten zu der ersten Basisstation, um die Mobilstation zu übergeben, und zwar im Wesentlichen ohne A-Schnittstellenprotokolle zu verletzen.

58. Vorrichtung gemäß Anspruch 53, wobei Mobilstation einen Gewichtungsfaktor an das zweite Signal anlegt, bevor die Signalstärken verglichen werden.

## Revendications

1. Procédé pour transférer un poste mobile (40) en communication avec une première station de base (32) sur une première interface aérienne dans un système de télécommunication sans fil mobile (20) vers une seconde station de base (30) fonctionnant selon une seconde interface aérienne, le procédé comprenant les étapes suivantes :
recevoir au niveau du poste mobile (40) un signal envoyé sur la seconde interface aérienne à partir de la seconde station de base tandis que l'on maintient une liaison de communication avec la première station de base ;
envoyer des données en réponse au signal reçu du poste mobile (40) vers la première station de base (32) sur la première interface aérienne ;
transférer le poste mobile (40) de la première à la seconde station de base (30) en réponse aux données reçues du poste mobile ;
**caractérisé en ce que** :
la première station de base (32) est une station de base CDMA ou TDMA, la première interface aérienne étant une interface aérienne CDMA ou TDMA, respectivement ; et
la seconde station de base (30) est l'autre d'une station de base CDMA ou TDMA, la seconde interface aérienne étant une interface aérienne CDMA ou TDMA, respectivement.

2. Procédé selon la revendication 1, dans lequel les données comprennent une mesure d'intensité de signal, et dans lequel le transfert du poste mobile (40) comprend la comparaison des mesures d'intensité de signal des première et seconde stations de base et le transfert du poste mobile en réponse à la comparaison.

3. Procédé selon la revendication 2, comprenant en outre l'application d'un facteur de pondération à la mesure d'intensité de signal.

4. Procédé selon la revendication 3, dans lequel l'application du facteur de pondération comprend une modification du facteur selon l'état du réseau dans le système.

5. Procédé selon la revendication 3, dans lequel l'application du facteur de pondération comprend une transmission d'un facteur de pondération sur la liaison de communication vers le poste mobile (40) qui applique le facteur de pondération à la mesure.

6. Procédé selon la revendication 1, dans lequel les données comprennent une identification de la seconde station de base (30) basée sur le décodage par le poste mobile du signal reçu sur la seconde interface aérienne.

7. Procédé selon la revendication 1, comprenant en outre l'émission à partir de la première station de base (32) vers le poste mobile d'une liste de fréquences de stations de base du second type dans le système de sorte que le poste mobile chercher à recevoir le signal à une fréquence comprise dans la liste.

8. Procédé selon la revendication 1, dans lequel le transfert du poste mobile comprend la transmission d'un ordre de transfert à partir de la première station de base.

9. Procédé selon la revendication 1, dans lequel la réception du signal au niveau du poste mobile utilise un émetteur-récepteur RF unique dans le poste mobile.

10. Procédé selon l'une quelconque des revendications précédentes, dans lequel l'interface TDMA comprend une interface GSM et dans lequel l'interface CDMA est agencée pour transporter des messages de réseau GSM.

11. Procédé selon l'une quelconque des revendications précédentes, dans lequel l'interface CDMA est basée sur une norme IS-95.

12. Procédé selon la revendication 10, dans lequel une couche de protocole de gestion de ressource radio unique est utilisée pour gérer la première interface aérienne et dans lequel le transfert du poste mobile comprend l'utilisation de la couche de protocole de gestion de ressource radio unique pour gérer la seconde interface aérienne.

13. Procédé selon la revendication 1, comprenant en outre la définition d'une zone de chevauchement entre une première région desservie par la première interface aérienne et une seconde région desservie par la seconde interface aérienne, et le déclenchement du poste mobile pour recevoir le signal quand le poste mobile est dans la zone de chevauchement.

14. Procédé selon l'une quelconque des revendications précédentes, dans lequel la première interface aérienne comprend une interface CDMA et la seconde interface aérienne comprend une interface GSM/TDMA et dans lequel la réception du signal au niveau du poste mobile comprend de commander le poste mobile pour interrompre une liaison de communication CDMA de façon à recevoir et décoder un signal GSM/TDMA.

15. Procédé selon la revendication 14, dans lequel la commande du poste mobile comprend l'interruption de communications CDMA pendant la durée d'une trame IS-95.

16. Procédé selon la revendication 14, dans lequel l'envoi des données comprend l'envoi d'une identification de la seconde station de base sur la base du décodage de canaux de correction et de synchronisation de fréquence GSM du signal par le poste mobile.

17. Procédé selon la revendication 1, dans lequel la première interface aérienne comprend une interface GSM/TDMA et la seconde interface aérienne comprend une interface CDMA et dans lequel la réception du signal au niveau du poste mobile comprend la commande du poste mobile pour interrompre la liaison de communication de façon à recevoir et décoder un signal CDMA.

18. Procédé selon la revendication 17, comprenant en outre le transport d'un message de service de diffusion de cellules GSM vers le poste mobile pour initier une recherche par le poste mobile d'un signal en provenance d'une station de base du second type.

19. Procédé selon la revendication 18, dans lequel le transport du message de service de diffusion de cellules GSM vers le poste mobile comprend le transport du message de façon à le recevoir par le poste mobile quand le poste mobile fonctionne dans un mode dédié.

20. Procédé selon la revendication 17, dans lequel l'envoi de données à partir du poste mobile comprend l'envoi d'une identification d'un faisceau pilote CDMA décodé par le poste mobile.

21. Procédé selon la revendication 17, comprenant en outre le mappage de la seconde station de base en tant que station de base GSM de façon à commander le transfert.

22. Procédé selon la revendication 17, dans lequel la commande du poste mobile comprend la commande du poste mobile pour recevoir le signal CDMA pendant un premier créneau temporel TDMA et pour décoder le signal pendant un créneau temporel TDMA suivant tandis que l'on communique avec la station de base sur l'interface TDMA de façon à produire les données envoyées par la station de base.

23. Procédé selon la revendication 1, dans lequel le système de télécommunication sans fil mobile (20) est un système de télécommunication sans fil mobile GSM, le procédé comprenant en outre :
mapper la station de base CDMA qui fonctionne selon l'interface aérienne CDMA en tant que station de base GSM/TDMA ;
comparer l'intensité du signal envoyé sur la seconde interface aérienne à partir de la seconde station de base à l'intensité du signal reçu sur la première interface aérienne à partir de la première station de base, sensiblement comme si les première et seconde stations de base étaient les stations de base GSM/TDMA ; et
transférer le poste mobile de la première à la seconde station de base en réponse à la comparaison des intensités de signal.

24. Procédé selon la revendication 23, dans lequel le mappage de la station de base CDMA comprend l'affectation à la station de base d'une fréquence et d'une position GSM.

25. Procédé selon la revendication 23, comprenant en outre le transport de messages entre les première et seconde stations de base et un central mobile dans le système par l'intermédiaire d'une interface A-GSM.

26. Procédé selon la revendication 25, dans lequel les première et seconde stations de base fonctionnent selon l'interface aérienne CDMA.

27. Procédé selon la revendication 26, dans lequel le transfert du poste mobile comprend le transport d'un nouveau code long IS-95 par l'interface A, sensiblement sans violer les protocoles d'interface A.

28. Procédé selon la revendication 23, comprenant en outre l'application d'un facteur de pondération au second signal et dans lequel la comparaison des intensités des signaux comprend la comparaison du signal pondéré.

29. Procédé selon la revendication 28, dans lequel l'application du facteur de pondération comprend le transport du facteur de pondération vers le poste mobile, tandis que l'on applique le facteur de pondération au second signal.

30. Procédé selon la revendication 28, dans lequel l'application du facteur de pondération comprend la modification du facteur selon l'état du réseau dans le système.

31. Dispositif de communication sans fil destiné à être utilisé dans un système de télécommunications mobile sans fil (20) comprenant :
une station de base (32) d'un premier type qui émet et reçoit un premier signal selon une première interface aérienne ;
une station de base (30) d'un second type qui émet et reçoit un second signal selon une seconde interface aérienne ; et
un poste mobile (40) qui reçoit le second signal sur la seconde interface aérienne à partir de la station de base du second type tandis que l'on maintient une liaison de communication sur la première interface aérienne avec la station de base du premier type et qui émet des données vers la station de base du premier type en réponse au second signal de sorte que le poste mobile est transféré de la première à la seconde station de base en réponse aux données émises,
**caractérisé en ce que** :
la première station de base est l'une d'une station de base CDMA ou TDMA, la première interface aérienne étant une interface aérienne CDMA ou TDMA, respectivement ; et
la seconde station de base est l'autre d'une station de base CDMA ou TDMA, la seconde interface aérienne étant une interface aérienne CDMA ou TDMA respectivement.

32. Dispositif selon la revendication 31, dans lequel les données émises par le poste mobile comprennent une mesure d'intensité de signal, de sorte que le poste mobile est transféré en réponse à une comparaison des intensités de signal des premier et second signaux.

33. Dispositif selon la revendication 32, dans lequel un facteur de pondération est appliqué à la mesure d'intensité de signal.

34. Dispositif selon la revendication 33, dans lequel le facteur de pondération est modifié selon l'état du réseau dans le système.

35. Dispositif selon la revendication 32, dans lequel le facteur de pondération est émis sur la liaison de communication vers le poste mobile, qui applique le facteur de pondération à la mesure.

36. Dispositif selon la revendication 31, dans lequel le poste mobile décode le second signal pour déterminer une identification de la station de base du second type.

37. Dispositif selon la revendication 31, dans lequel la station de base du premier type émet vers le poste mobile une liste de fréquences de stations de base mobiles du second type dans le système, de sorte que la station mobile cherche à recevoir le second signal à une fréquence dans la liste.

38. Dispositif selon la revendication 31, dans lequel la station de base du premier type émet vers le poste mobile un ordre de transfert, d'où il résulte que le poste mobile est transféré de la première à la seconde station de base.

39. Dispositif selon la revendication 31, dans lequel le poste mobile comprend un émetteur-récepteur RF unique (42) qui communique avec les stations de base des premier et second types.

40. Dispositif selon l'une quelconque des revendications 31 à 39, dans lequel l'interface TDMA comprend une interface GSM et dans lequel l'interface CDMA est agencée pour transporter des messages de réseau GSM.

41. Dispositif selon l'une quelconque des revendications 31 à 40, dans lequel l'interface CDMA est basée sur une norme IS-95.

42. Dispositif selon l'une quelconque des revendications 31 à 41, dans lequel le poste mobile utilise une couche de protocole de gestion de ressource radio unique pour gérer les première et seconde interfaces aériennes.

43. Dispositif selon la revendication 31, dans lequel la station de base déclenche le poste mobile pour recevoir le second signal sur la seconde interface aérienne quand le poste mobile est dans une zone de chevauchement entre une première région desservie par la première interface aérienne et une deuxième région desservie par la seconde interface aérienne.

44. Dispositif selon la revendication 31, dans lequel la première interface aérienne comprend une interface CDMA et la seconde interface aérienne comprend une interface GSM/TDMA, et dans lequel la station de base du premier type commande le poste mobile pour interrompre la liaison de communication de façon à recevoir et décoder un signal GSM.

45. Dispositif selon la revendication 44, dans lequel le poste mobile interrompt la liaison pendant la durée d'une trame IS-95.

46. Dispositif selon la revendication 44, dans lequel le poste mobile traite le second signal pour décoder les canaux de correction et de synchronisation de fréquence GSM du signal.

47. Dispositif selon la revendication 31, dans lequel la première interface aérienne comprend une interface GSM/TDMA et la seconde interface aérienne comprend une interface CDMA, et dans lequel la station de base du premier type commande le poste mobile pour interrompre la liaison de communication de façon à recevoir et décoder un signal CDMA.

48. Dispositif selon la revendication 47, comprenant en outre un centre de télédiffusion de cellules GSM (28) qui transporte un message de service télédiffusé de cellules vers le poste mobile pour initier une recherche par le poste mobile du second signal.

49. Dispositif selon la revendication 48, dans lequel le poste mobile reçoit le message de service de télédiffusion de cellules tandis que le poste mobile fonctionne dans un mode dédié.

50. Dispositif selon la revendication 47, dans lequel le poste mobile traite le signal CDMA pour identifier un faisceau pilote CDMA.

51. Dispositif selon la revendication 47, comprenant en outre des moyens pour mapper la seconde station de base en tant que station de base GSM de façon à commander le transfert.

52. Dispositif selon la revendication 47, dans lequel le poste mobile reçoit le signal CDMA pendant un premier créneau temporel TDMA et traite le signal pendant un créneau temporel TDMA suivant tandis qu'il communique avec la station de base sur l'interface TDMA de façon à produire les données pour transmission vers la station de base.

53. Dispositif selon la revendication 31, dans lequel le système de télécommunication mobile sans fil (20) est un système de télécommunication GSM, le dispositif comprenant en outre :
des moyens pour mapper la station de base CDMA dans le système GSM en tant que station de base GSM, le poste mobile étant transféré de la première à la seconde station de base en réponse à une comparaison d'intensité des premier et second signaux reçus par le poste mobile, sensiblement comme si les première et seconde stations de base fonctionnaient selon une interface aérienne GSM/TDMA.

54. Dispositif selon la revendication 53, dans lequel une fréquence et un emplacement GSM dans le système sont affectés à une station de base CDMA.

55. Dispositif selon la revendication 53, dans lequel des messages sont transportés entre les première et seconde stations de base et un central mobile dans le système par l'intermédiaire d'une interface A-GSM.

56. Dispositif selon la revendication 55, dans lequel les premier et second signaux comprennent des signaux CDMA.

57. Dispositif selon la revendication 56, dans lequel un nouveau code long IS-95 est transporté par l'interface A de la seconde à la première station de base de façon à transférer le poste mobile sensiblement sans violer les protocoles d'interface A.

58. Dispositif selon la revendication 53, dans lequel le poste mobile applique un facteur de pondération au second signal avant de comparer les intensités de signal.
